(19) Europäisches Patentamt
European Patent Office
Office européen des brevets

(11) **EP 2 011 825 B1**

(12) **EUROPEAN PATENT SPECIFICATION**

(45) Date of publication and mention of the grant of the patent:
**08.08.2018 Bulletin 2018/32**

(51) Int Cl.:
*C08L 63/00* (2006.01)  *C08G 59/42* (2006.01)
*C08J 5/24* (2006.01)  *C08K 5/49* (2006.01)
*C08G 59/68* (2006.01)  *C08K 5/50* (2006.01)

(21) Application number: **07741563.6**

(22) Date of filing: **13.04.2007**

(86) International application number:
**PCT/JP2007/058127**

(87) International publication number:
**WO 2007/125759 (08.11.2007 Gazette 2007/45)**

(54) **USE OF EPOXY RESIN COMPOSITION FOR FIBRE-REINFORCED MATERIAL AND ITS PRODUCTION**

VERWENDUNG VON EPOXIDHARZZUSAMMENSETZUNG FÜR FASERVERSTÄRKTER VERBUNDWERKSTOFF UND HERSTELLUNGSVERFAHREN DAFÜR

UTILISATION DE COMPOSITION DE RESINE EPOXY POUR MATERIAU COMPOSITE RENFORCE PAR UNE FIBRE ET SON PROCEDE DE PRODUCTION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.04.2006 JP 2006118956**

(43) Date of publication of application:
**07.01.2009 Bulletin 2009/02**

(73) Proprietor: **TORAY INDUSTRIES, INC.**
**Tokyo 103-8666 (JP)**

(72) Inventors:
• **HONDA, Shiro**
**Iyo-gun, Ehime 791-3193 (JP)**

• **TANAKA, Go**
**Iyo-gun, Ehime 791-3193 (JP)**

(74) Representative: **Webster, Jeremy Mark et al**
**Mewburn Ellis LLP**
**City Tower**
**40 Basinghall Street**
**London EC2V 5DE (GB)**

(56) References cited:
**EP-A1- 1 454 956**  **WO-A1-03/002661**
**JP-A- 5 136 300**  **JP-A- 7 028 043**
**JP-A- 03 017 118**  **JP-A- 05 209 040**
**JP-A- 07 028 043**  **JP-A- 07 286 033**
**JP-A- 10 044 250**  **JP-A- 11 302 507**
**JP-A- 2003 055 434**  **US-A- 5 198 479**

**Description**

TECHNICAL FIELD

The present invention relates to an epoxy resin composition used for fiber-reinforced composite materials, a fiber-reinforced composite material using the same, and a production method of a fiber-reinforced composite material in which a liquid epoxy resin composition is injected into a reinforcing fiber substrate disposed in a mold and the liquid epoxy resin composition is heated and cured.

BACKGROUND ART

Application of fiber-reinforced composite materials consisting of a reinforcing fiber and a matrix resin is broadly extended to the fields including aerospace, sporting goods, and general industries, since fiber-reinforced composite materials make it possible to design a material of using advantages of a reinforcing fiber and a matrix resin.

As a reinforcing fiber, glass fibers, aramid fibers, carbon fibers, and boron fibres are used. As a matrix resin, both thermosetting resins and thermoplastic resins are used, but thermosetting resins are more frequently used because reinforcing fibers can be more easily impregnated with the thermosetting resins. As such thermosetting resins, epoxy resins, unsaturated polyester resins, vinyl ester resins, phenolic resins, bismaleimide resins, and cyanate resins are used.

For a production of the fiber-reinforced composite material, methods such as a prepreg pressure-forming method, a hand lay-up method, a filament winding method, a pultrusion method, and an RTM (resin transfer molding) method are applied.

Among these methods, the RTM method, which is a method in which a liquid thermosetting resin composition is injected into a reinforcing fiber substrate placed in a mold and the liquid thermosetting resin composition is heated and cured, has a large advantage of being able to mold a fiber-reinforced composite material having a complicated shape.

Recently, there has been a need for producing fiber-reinforced composite materials having high fiber volume fraction (Vf), particularly Vf of 45% or more, which are lightweight, and excellent in mechanical properties such as strength and elastic modulus, by using the RTM method. Further, there has been a need for producing fiber-reinforced composite materials having a large size, particularly fiber-reinforced composite materials with an area of over 1 m$^2$, as typified by automobile's exterior body panels or airplane wings.

However, it has been difficult to efficiently produce fiber-reinforced composite materials having high Vf or fiber-reinforced composite materials having a large size in the shortest possible time by using the conventional RTM method.

In the RTM method, the packing fraction of reinforcing fibers in a mold has to be high to produce fiber-reinforced composite materials having high Vf because the Vf of a product is substantially determined by the packing fraction of reinforcing fibers in a mold. Since high packing fraction means narrow resin pass space, permeability of the resin composition to be injected is low and an injecting time of the resin composition is lengthened. Further, when the reinforcing fiber has a large size, the injecting time of the resin composition is also lengthened.

When the liquid thermosetting resin composition is cured at a constant temperature in a mold, viscosity of the resin composition increases while keeping a liquid state at the initial stage of a curing reaction and then gelation occurs. After gelation, the resin composition becomes a rubbery polymer. The glass transition temperature of the polymer increases as the curing reaction progresses, and when the glass transition temperature exceeds the curing temperature, the polymer becomes a glassy polymer. In general, demolding is carried out after vitrification. Further, for general thermosetting resin compositions, a ratio of the time between the beginning of injection and the vitrification to the time during which a state of liquid having such a viscosity that the epoxy resin composition can be injected is held after the beginning of injection is often greater than 6.

In those in which the Vf is not high or a size is relatively small, it is possible to carry out the method in a short time (several minutes or ten and several minutes), in which impregnation and injection are completed before the viscosity of the thermosetting resin compositions significantly increases, and curing for a predetermined time and demolding are carried out while maintaining the constant mold temperature, because the injecting time of the thermosetting resin composition can be short. Such a moulding method is often called S-RIM (structural reactive injection molding) method.

However, when the fiber-reinforced composite materials having high Vf or the fiber-reinforced composite materials having a large size are produced, if similar molding is performed under such a temperature condition that curing is completed in a short time, a excessive increase in viscosity and further gelation occur in the process of impregnation and the completion of impregnation becomes impossible. If the molding temperature is lowered or the reactivity of the thermosetting resin composition is lowered to prevent excessive increase of viscosity during a duration required for impregnation, the time before demolding is increased, and the molding time is lengthened. In order to shorten the molding time, a method of raising the temperature of the mold after the completion of injection to shorten a time before demolding is often used. In this method, however, there were limitations to reduction of a total molding process time since the method requires additional time to raise and lower the temperature of the mold.

Further, there may be cases where sporting goods or automobile's exterior body panels is coated with a fiber-reinforced composite material together with a transparent coating material to show the reinforcing fiber apparently to use the fiber-reinforced composite material to decoration or design, and the transparency and coloring of the thermosetting matrix resin may become a problem.

Furthermore, from the requirement for image clarity (the image on the panel is sharp and is not distorted) typified by the automobile's exterior body panels, the surface smoothness of the fiber-reinforced composite material is required at a high level.

Such efforts toward a packing property in the reinforcing fiber substrates or a property of curing in a short time by using an S-RIM method or an RTM method are heretofore made, and for example, an epoxy resin composition for reactive injection molding, in which a curing accelerator is mixed in a specific epoxy resin and a specific acid anhydride curing agent, is disclosed. However, in this example, just only a relatively small molded article could be molded, and a curing property was inadequate, for example, the molded articles was subjected to post-curing (for example, see Patent Document 1).

Further, a resin composition for an RTM molding, in which a specific epoxy resin having a polymerizable unsaturated group is mixed in an epoxy resin and an acid anhydride curing agent, is disclosed. However, in this example, the results of this resin composition were on a relatively small molded article and the resin composition was inadequate for a large molded article, and the shrinkage due to curing of resin composition through a reaction of the polymerizable unsaturated group is large, and surface smoothness cannot be desired (for example, see Patent Document 2).

Furthermore, a resin composition which cures an epoxy resin in a short curing time through anionic polymerization using tertiary amine and a proton donor is disclosed. However, in this method, viscosity of the resin composition is high and this is unsuitable for a large molded article. Further, coloring was intense and there was a problem in good design of the molded article (for example, see Patent Document 3).

Patent Document 1: JP-A-3-50244; Patent Document 2: JP-A-7-25986; and Patent Document 3: US-7148294. JP07-028043-A describes an epoxy resin composition for making a transparent resin substrate. US 5,198,479 describes a light transmissive epoxy resin for encapsulating optical semi-conductor devices. JP2872848B2 describes an epoxy resin composition for use in an optical semiconductor device. EP-A-1454 956 proposes an epoxy resin composition comprising at least (A) an epoxy resin having a cycloalkane ring or cyclohexene ring (but having neither an aromatic ring nor aminic nitrogen atom), (B) a carboxylic anhydride having no aromatic ring, and (c) an ultraviolet absorbent.

In view of the above state of the art, an object of the present invention is to provide use of an epoxy resin composition in which a ratio of the time between the beginning of injection and the vitrification of the epoxy resin composition to the time during which a state of liquid having such a viscosity that the epoxy resin composition can be injected is held after the beginning of injection is small, a fiber-reinforced composite material using the epoxy resin composition, and a production method of a fiber-reinforced composite material, in order to enable to mold fiber-reinforced composite materials having high fiber volume fraction (Vf) and excellent mechanical properties or fiber-reinforced composite materials having a large size in a short time.

Further, an object of the present invention is to provide use of an epoxy resin composition in which a resin cured product is highly transparent and has less-coloring and the surface smoothness of the fiber-reinforced composite material is excellent, a fiber-reinforced composite material using the epoxy resin composition, and a production method of a fiber-reinforced composite material.

Means for Solving the Problems

Various investigations have been made to solve the above-mentioned problems, and consequently the present inventor have found an epoxy resin composition for a fiber-reinforced composite material, comprising an epoxy resin [A], an acid anhydride curing agent [B] and an organic phosphorus compound [C], wherein the organic phosphorus compound [C] is contained in an amount of 0.2 to 2% by weight in terms of a phosphorus atom contained amount with respect to the sum of the epoxy resin composition, an amount of a nitrogen atom containing compound contained in the epoxy resin composition is 0 to 0.5% by weight in terms of a nitrogen atom contained amount with respect to the sum of the epoxy resin composition, and an amount of a compound having a polymerizable unsaturated group contained in the epoxy resin composition is 0 to 5% by weight with respect to the sum of the epoxy resin composition.

In such epoxy resin composition, it is preferable that when the times required for a cure index obtained by dielectric measurement at a retained constant temperature to reach 10% and 90% are denoted by $t_{10}$ and $t_{90}$ (unit: minutes), $t_{10}$ and $t_{90}$ have a specific temperature T which satisfies the relational expressions of $1 \leq t_{10} \leq 10$, $3 \leq t_{90} \leq 30$ and $1 < t_{90}/t_{10} \leq 3$, and that in color tone obtained by measuring a resin cured product which is prepared by curing the epoxy resin composition at 100°C for 20 minutes, with a multi-light source spectrophotometer, a* indicating a degree of coloring in a red/green direction a test piece of 2 mm in thickness and b* indicating a degree of coloring in a yellow/blue direction satisfy the relational expressions of $|a^*| \leq 2$ and $|b^*| \leq 5$.

Further, a fiber-reinforced composite material consisting of a resin cured product formed by curing the epoxy resin composition and a reinforcing fiber, and a production method thereof, as well as an automobile part formed by using the fiber-reinforced composite material are also preferable aspects of the present invention.

The claims define the present invention.

Effects of the Invention

In accordance with using the epoxy resin composition described herein, it becomes possible to mold a large molded article in a short time. The fiber-reinforced composite material obtained by using such epoxy resin composition is excellent in mechanical properties, surface color tone and a filling property as a large molded article, and has less asperity and less defective pinholes.

BEST MODE FOR CARRYING OUT THE INVENTION

Hereinafter, desirable embodiments of the present invention will be described.

First, the epoxy resin composition used in the present invention will be described.

The epoxy resin composition used in the present invention is an epoxy resin composition for a fiber-reinforced composite material, comprising an epoxy resin [A], an acid anhydride curing agent [B] and an organic phosphorus compound [C], wherein the organic phosphorus compound [C] is contained in an amount of 0.2 to 2% by weight in terms of a phosphorus atom contained amount with respect to the sum of the epoxy resin composition, an amount of a nitrogen atom containing compound contained in the epoxy resin composition is 0 to 0.5% by weight in terms of a nitrogen atom contained amount with respect to the sum of the epoxy resin composition, and an amount of a compound having a polymerizable unsaturated group contained in the epoxy resin composition is 0 to 5% by weight with respect to the sum of the whole epoxy resin composition.

The organic phosphorus compound [C] of the present invention is a compound which promotes a curing reaction of the epoxy resin with the acid anhydride curing agent, and specific examples thereof include organic phosphorus compounds having a trivalent phosphorus atom.

Specific examples of the organic phosphorus compound [C} of the present invention include tributylphosphine, trioctylphosphine, tricyclohexylphosphine, triphenylphosphine, tribenzylphosphine, tri-o-tolyl phosphine, tri-m-tolyl phosphine, tri-p-tolyl phosphine, tris(4-methoxyphenyl)phosphine, tris(2,6-dimethoxyphenyl) phosphine, diphenylcyclohexylphosphine, p-styryldiphenylphosphine, 1,2-bis(diphenylphosphino)ethane, 1,3-bis(diphenylphosphino)propane, 1,4-bis(diphenylphosphino)butane, tetraphenylphosphonium tetraphenylborate, and triphenylphosphinetriphenylborane, and these compounds may be used singly or in combination of two or more kinds. Among these compounds, compounds, in which one or more aromatic groups are directly bound to a phosphorus atom which is excellent in point of promoting a curing reaction, are used.

The contained amount of the organic phosphorus compound [C] of the present invention is defined by the phosphorus atom contained amount contained in the organic phosphorus compound [C] irrespective of a chemical structure of a compound, and this contained amount is 0.2 to 2% by weight in terms of the phosphorus atom contained amount with respect to the sum of the epoxy resin composition. When the phosphorus atom contained amount is in this range, an increase in viscosity at the beginning of molding of the epoxy resin composition is inhibited, the epoxy resin composition is impregnated well with a reinforcing fiber substrate, a reaction proceeds rapidly after a lapse of a certain period of time after heating, curing is almost completed in a short time and demolding becomes possible, and therefore the molding in a short time can be realized.

The reason why there is difference between mechanisms which cause a reaction of the epoxy group with the acid anhydride group in not still clear, but it is considered that a mechanism with the phosphorus atom is different from that with the nitrogen atom having high electronegativity and small polarization (the so-called hard base) due to the fact that a trivalent phosphorus atom has lower electronegativity and larger polarization than the nitrogen atom and is the so-called soft base (nucleophilic agent) .

When the phosphorus atom contained amount is less than this range, a curing reaction of the epoxy resin composition becomes slow and the molding in a short time cannot be realized. Further, when the phosphorus atom contained amount is more than this range, the curing reaction becomes too fast, and the impregnation to the reinforcing fiber substrate becomes insufficient and a good molded article cannot be achieved. In order to mold in a shorter time or to mold a composite material having a larger size, the phosphorus atom contained amount is more preferably 0.25 to 1.5% by weight with respect to the sum of the epoxy resin composition.

The phosphorus atom contained amount (% by weight) in the epoxy resin composition can be quantified by a calculation method described later from mixed substances in the epoxy resin composition and a mixing ratio of the mixed substances, or can be quantified by organic elemental analysis or ICP-MS (inductively-coupled plasma source mass spectrometry) of the epoxy resin composition or the resin cured product. As the phosphorus atom contained amount in the epoxy resin composition is quantified from measurement results of the phosphorus atom contained amount quantified by using the resin cured product, the phosphorus atom contained amount in the resin cured product, quantified by the organic elemental analysis or ICP-MS (Inductively Coupled Plasma source Mass Spectrometry) of the resin cured product, may be considered as being the same as the phosphorus atom contained amount in the epoxy resin composition.

In the present invention, a compound which mixes the organic phosphorus compound [C] and further promotes a curing reaction of the epoxy resin with the acid anhydride curing agent may be mixed. Specific examples thereof include tertiary amine compounds, imidazole derivatives and salts thereof, examples of the tertiary amine compounds and salts thereof include triethylamine, dimethylbenzylamine, 2,4,6-tris(dimethylaminomethyl)phenol, 1,5-diazabicyclo[4.3.0]nona-5-en, 1,8-diazabicyclo[5.4.0]undeca-7-en, phenolic salt of 1,8-diazabicyclo[5.4.0]undeca-7-en, phthalate salt of 1,8-diazabicyclo[5.4.0]undeca-7-en, pyridine, 4-dimethylaminopyridine, 3-dimethylaminopropylamine, 3-diethylaminopropylamine, 3-dibutylaminopropylamine, 2-diethylaminoethylamine, 1-diethylamino-4-aminopentane, N-(3-aminopropyl)-N-methylpropanediamine, 1-(2-aminoetheyl)piperazine, 1,4-bis(2-aminoethyl)piperazine, 3-(3-dimethylaminopropyl)propylamine, 1,4-bis(3-aminopropyl)piperazine, 4-(2-aminoethyl)morpholine, and 4-(3-aminopropyl)morpholine, and examples of the imidazole derivatives and salts thereof include imidazole, 2-methylimidazole, 2-ethylimidazole, 2-undecylimidazole, 2-heptadecylimidazole, 2-phenylimidazole, 1,2-dimethylimidazole, 2-ethyl-4-methylimidazole, 2-phenyl-4-methylimidazole, 1-benzyl-2-phenylimidazole, 1-benzyl-2-methylimidazole, 1-cyanoethyl-2-methylimidazole, and 1-aminoethyl-2.methylimidazole. A compound to be mixed as the compound which promotes a curing reaction of the epoxy resin with the acid anhydride curing agent is not limited to the above-mentioned compounds, and the above-mentioned compounds may be mixed in combination of plural species, but when the nitrogen atom containing compound is mixed, there is a restriction of the nitrogen atom contained amount described later and the nitrogen atom containing compound have to be mixed so as to fall within this restriction.

That is, the contained amount of the nitrogen atom containing compound in the present invention is defined by the nitrogen atom contained amount contained in the nitrogen atom containing compound irrespective of a chemical structure of a compound. In the epoxy resin composition of the present invention, the nitrogen atom contained amount derived from the nitrogen atom containing compound have to be 0 to 0.5% by weight with respect to the sum of the epoxy resin composition, the less contained amount is preferable, and more preferably, the nitrogen atom containing compound is not substantially contained.

When the nitrogen atom contained amount derived from the nitrogen atom containing compound is more than 0.5% by weight, in the epoxy resin composition, the initial increase in viscosity is large, the impregnation to the reinforcing fiber substrate is deteriorated and a good molded article cannot be achieved. It is considered that this state results from the fact that as described above, a trivalent nitrogen atom has higher electronegativity and smaller polarization than the phosphorus atom and is a so-called hard base. Furthermore, in order to further improve the impregnation to the reinforcing fiber substrate, or to mold a composite material having a large size in a short time, the nitrogen atom contained amount (with reference to the epoxy resin composition) derived from the nitrogen atom containing compound is more preferably kept below the phosphorus atom contained amount (with reference to the epoxy resin composition) contained in the organic phosphorus compound [C] .

The nitrogen atom containing compound defined in the present invention refers to a compound containing a nitrogen atom and capable of reacting the epoxy resin, and this compound includes a compound which promotes a curing reaction between the epoxy resin and the acid anhydride curing agent, a compound which causes the epoxy resin to polymerize, and a compound which reacts with the epoxy resin. Specific examples of this compound are trivalent organic nitrogen compounds and include primary amino group-containing compounds, secondary amino group-containing compounds, and tertiary amino group-containing compounds. More specific examples of the nitrogen atom containing compound include various aliphatic amine compounds known as a curing agent for an epoxy resin, aromatic amine compounds, imidazole compounds, tertiary amine compounds, and the like. Further, an epoxy resin having an aminoglycidyl group is also included in the nitrogen atom containing compound in the present invention since it has a tertiary amino group and contributes to a reaction of the epoxy resin.

The nitrogen atom contained amount (% by weight) derived from the nitrogen atom containing compound in the epoxy resin composition can be quantified by a calculation method described later from mixed substances of the epoxy resin composition and a mixing ratio of the mixed substances, or can be quantified by organic elemental analysis of the epoxy resin composition or the resin cured product. As the nitrogen atom contained amount in the epoxy resin composition is quantified from measurement results of the nitrogen atom contained amount quantified by using the resin cured product, the nitrogen atom contained amount in the resin cured product, quantified by the organic elemental analysis of the resin cured product, may be considered as being the same as the nitrogen atom contained amount in the epoxy resin composition.

In the present invention, it is necessary that an amount of a compound having a polymerizable unsaturated group contained in the epoxy resin composition be 0 to 5% by weight with respect to the sum of the epoxy resin composition.

The compound having a polymerizable unsaturated group defined in the present invention refers to a compound which is polymerized at a temperature lower than a temperature of a curing reaction of the epoxy resin with the acid anhydride in the presence of the polymerization initiator. Specific examples of this compound are various compounds having a vinyl group, and include typically unsaturated polyester resins, vinyl ester resins, bismaleimide resins, styrene, glycidylmethacrylate, and compounds formed by adding acrylic acid or methacrylic acid to one end of diglycidyl ethers such as ethylene glycol, propylene glycol, 1,4-butanediol, 1,6-hexanediol, neopentyl glycol, polyethylene glycol, and polypropylene glycol, but other compound correspond to the compound having a polymerizable unsaturated group as long as it has a vinyl group. Since a polymerization reaction of the compounds having a vinyl group is fast, it increases initial viscosity in molding of the epoxy resin composition and deteriorates the impregnation to the reinforcing fiber substrate, and therefore a good molded article cannot be obtained. Further, since the shrinkage due to polymerization is larger than the epoxy resin, the appearance and surface quality of the molded articles are deteriorated (asperity is enlarged) and therefore it is not preferable particularly for members in which good design is important like automobile parts.

From the reason described above, the contained amount of a compound having a polymerizable unsaturated group contained in the epoxy resin composition is preferably 0 to 3% by weight with respect to the sum of the epoxy resin composition, and more preferably 0 to 1% by weight, and furthermore preferably, the compound having a polymerizable unsaturated group is not substantially contained. The existence of the polymerizable unsaturated group can be identified by separating the epoxy resin composition into each mixing component by using GPC (gel permeation chromatography) or HPLC (high performance liquid chromatography), taking out each mixing component, and analyzing it with NMR.

In the present invention, when a phosphorus atom contained amount in the epoxy resin composition is denoted by $R_p$ (% by weight), a nitrogen atom contained amount is denoted by $R_N$ (% by weight), and an amount of a compound having a polymerizable unsaturated group is denoted by $R_U$ (% by weight), they are calculated by using following equations from each atom contained amount in mixed substances in the epoxy resin composition and a mixing ratio of the mixed substances.

$$R_p = W_C \times (31 / MW_C) / W_S \times 100$$

$$R_N = ((W_{A2} \times 14 / MW_{N1}) + (W_D \times 14 / MW_{N2})) / W_S \times 100$$

$$R_U = (W_{A3} + W_E) / W_S \times 100$$

$W_{A1}$: Total parts by weight of an epoxy resin [A1] containing neither a nitrogen atom nor a polymerizable unsaturated group in the epoxy resin composition

$W_{A2}$: Total parts by weight of an epoxy resin [A2] containing a nitrogen atom in the epoxy resin composition

$W_{A3}$: Total parts by weight of an epoxy resin [A3] containing a polymerizable unsaturated group in the epoxy resin composition

$W_A$: ($W_{A1} + W_{A2} + W_{A3}$)

$W_B$: Total parts by weight of an acid anhydride compound [B] in the epoxy resin composition

$W_C$: Total parts by weight of an organic phosphorus compound [C] in the epoxy resin composition

$W_D$: Total parts by weight of a nitrogen atom containing compound, other than the epoxy resin [A2], containing a nitrogen atom in the epoxy resin composition

$W_E$: Total parts by weight of a compound having a polymerizable unsaturated group, other than the epoxy resin [A3], containing a polymerizable unsaturated group in the epoxy resin composition

$W_F$: Total parts by weight of other mixed substances in the epoxy resin composition

$W_S$: ($W_A + W_B + W_C + W_D + W_E + W_F$)

$MW_C$: Molecular weight of an organic phosphorus compound [C]

$MW_{N1}$: Molecular weight of an epoxy resin [A2] containing a nitrogen atom in the epoxy resin composition

$MW_{N2}$: Molecular weight of a nitrogen atom containing compound, other than an epoxy resin, containing a nitrogen atom in the epoxy resin composition

Atomic weight of phosphorus: 31

Atomic weight of nitrogen: 14

Hereinafter, methods of determining the amounts of the epoxy resin [A], the acid anhydride curing agent [B] and the organic phosphorus compound [C] to be mixed, respectively, and the phosphorus atom contained amount, the nitrogen atom contained amount, and the contained amount of the compound containing a polymerizable unsaturated group by analysis from the epoxy resin composition will be described. The following method is just one example, and the method of analyzing the mixed amounts and the contained amounts of components constituting the epoxy resin composition of the present invention is not limited thereto this .

First, the epoxy resin composition is dissolved in chloroform to be separated into a chloroform-soluble fraction and a chloroform-insoluble fraction. Next, the chloroform-soluble fraction is separated into each component by using GPC (gel permeation chromatography) and each component is taken out. By measuring a weight ratio of each component and NMR (nuclear magnetic resonance) of separated substances, the molecular structure and the contained amount of the epoxy resin [A], the acid anhydride curing agent [B] and the compound containing a polymerizable unsaturated group in the epoxy resin composition can be determined. Further, the epoxy resin composition can be subjected to mass spectrometry by using GC-MS (Gas Chromatography-Mass Spectrometry) or TG-MS (Thermogravimetry Mass Spectrometry) to identify each component. Further, the phosphorus atom contained amount and the nitrogen atom contained amount in the epoxy resin composition can be determined by burning the epoxy resin composition by an organic elemental analysis method, or can be quantified by ICP-MS (Inductively-Coupled Plasma source Mass Spectrometry).

The epoxy resin [A] in the present invention refers to a compound having two or more epoxy groups in a molecule.

Specific examples of the epoxy resin [A] of the present invention include aromatic glycidyl ether obtained from phenol having a plurality of hydroxyl groups, aliphatic glycidyl ether obtained from alcohol having a plurality of hydroxyl groups, glycidyl amine obtained from amine, glycidyl ester obtained from carboxylic acid having a plurality of carboxyl groups, and epoxy resins having an oxirane ring.

Examples of aromatic glycidyl ether which can be used as the epoxy resin [A] in the present invention include diglycidyl ethers obtained from bisphenol, such as diglycidyl ether of bisphenol A, diglycidyl ether of bisphenol F, diglycidyl ether of bisphenol AD, diglycidyl ether of bisphenol S, and the like; polyglycidyl ether of novolac obtained from phenol, alkyl phenol, and the like; diglycidyl ether of resorcinol, diglycidyl ether of hydroquinone, diglycidyl ether of 4,4'-dihydroxybiphenyl, diglycidyl ether of 4,4'-dihydroxy-3,3',5,5'-tetramethylbiphenyl, diglycidyl ether of 1,6-dihydroxynaphthalene, diglycidyl ether of 9,9'-bis(4-hydroxyphenyl)fluorene, triglycidyl ether of tris(p-hydroxyphenyl)methane, tetraglycidyl ether of tetrakis(p-hydroxyphenyl)ethane, and diglycidyl ether having oxazolidone backbone obtained by reacting diglycidyl ether of bisphenol A with difunctional isocyanate. Examples of the aliphatic glycidyl ether which can be used as the epoxy resin [A] in the present invention include diglycidyl ether of ethylene glycol, diglycidyl ether of propylene glycol, diglycidyl ether of 1,4-butanediol, diglycidyl ether of 1,6-hexanediol, diglycidyl ether of neopentyl glycol, diglycidyl ether of cyclohexane dimethanol, diglycidyl ether of glycerin, triglycidyl ether of glycerin, diglycidyl ether of trimethylolethane, triglycidyl ether of trimethylolethane, diglycidyl ether of trimethylolpropane, triglycidyl ether of trimethylolpropane, tetraglycidyl ether of pentaerythritol, diglycidyl ether of dodecahydro bisphenol A, and diglycidyl ether of dodecahydro bisphenol F. Examples of the epoxy resin having an oxirane ring, which can be used as the epoxy resin [A] in the present invention, include vinylcyclohexenedioxide, dipentene dioxide, 3,4-epoxycyclohexanecarboxylic acid 3,4-epoxycyclohexylmethyl, bis(3,4-epoxycyclohexylmethyl)adipate, dicyclopentadienedioxide, bis(2,3-epoxycyclopentyl)ether, and oligomer of 4-vinylcyclohexendioxide. Examples of glycidyl ester as an epoxy resins of diglycidyl ester type, which can be used as the epoxy resin [A] in the present invention, include phthalic acid diglycidyl ester, terephthalic acid diglycidyl ester, hexahydrophthalic acid diglycidyl ester, and dimer acid diglycidyl ester. Among them, diglycidyl ether of bisphenol A, diglycidyl ether of bisphenol F, and diglycidyl ether of bisphenol AD are preferably used as the epoxy resin [A] in the present invention since these diglycidyl ethers have an excellent balance of viscosity of a resin composition, heat resistance of the resulting resin cured product, and mechanical properties such as elastic modulus.

Examples of diglycidyl amine as the epoxy resin, which is not preferable as the epoxy resin [A] in the present invention because a trivalent nitrogen atom is contained in its molecule, include diglycidylaniline, tetraglycidyldiaminodiphenylmethane, N,N,N',N'-tetraglycidyl-m-xylylenediamine, and 1,3-bis(diglycidylaminomethyl)cyclohexane; triglycidyl-m-aminophenol and triglycidyl-p-aminophenol having both structures of glycidyl ether and glycidyl amine. The acid anhydride curing agent [B] of the present invention refers to a compound having one or more acid anhydride groups, which can react with an epoxy group of the epoxy resin, in a molecule.

As the acid anhydride curing agent [B] in the present invention, it is effective to use acid anhydride having a cycloalkane ring or a cycloalkene ring for enhancing heat resistance or mechanical properties of cured articles. Specific examples of the acid anhydride having a cycloalkane ring or a cycloalkene ring include hexahydrophthalic anhydride, methylhexahydrophthalic anhydride, methyldihydro Nadic anhydride, cyclopentanetetracarboxylic dianhydride, 1,2,3,6-tetrahydrophthalic anhydride, methyl-1,2,3,6-tetrahydrophthalic anhydride, Nadic anhydride, methyl Nadic anhydride, bicyclo[2.2.2]octo-7-en-2,3,5,6-tetracarboxylic dianhydride, and 4-(2,5-dioxotetrahydrofuran-3-yl)-3-methyl-1,2,5,6-tetrahyd rophthalic anhydride, but is not limited to these compounds. Acid anhydride having neither an aromatic ring, a cycloalkane ring nor a cycloalkene ring as an optional component can be used for the epoxy resin composition of the present invention. Examples of such acid anhydride include succinic anhydride.

The epoxy resin composition of the present invention preferably has viscosity of 0.1 to 2 Pa•s at 25°C. The reason for this is that by being the viscosity to 2 Pa•s or less, viscosity at a molding temperature can be reduced, a time required for injection to the reinforcing fiber substrate is shorten, and therefore the cause of non-impregnation can be prevented. The reason for this is also that by being the viscosity to 0.1 Pa•s or more, viscosity at a molding temperature does not become too low, therefore air can be involved to prevent the cause of pit upon injection to the reinforcing fiber subustrate, the impregnation becomes nonuniform, and this enables to prevent the cause of non-impregnation.

The viscosity in the present invention is determined by measuring viscosity of the epoxy resin composition just after preparing it, for example, based on a measuring method which uses cone-plate type viscometer in ISO 2884-1 (1999) . Examples of measuring apparatus can include TVE-30H manufactured by TOKI SANGYO Co., Ltd.

In the epoxy resin composition of the present invention, it is preferable that when the times required for a cure index obtained by dielectric measurement at a retained constant temperature to reach 10% and 90% are denoted by $t_{10}$ and $t_{90}$, $t_{10}$ and $t_{90}$ have a specific temperature T which satisfies the following three relational expressions:

$$1 \leq t_{10} \leq 10 \quad (1)$$

$$3 \leq t_{90} \leq 30 \quad (2),$$

and

$$1 < t_{90}/t_{10} \leq 3 \quad (3),$$

wherein $t_{10}$ represents a time (min) required for the cure index to reach 10% after beginning measurement at a temperature T and $t_{90}$ represents a time (min) required for the cure index to reach 90% after beginning measurement at a temperature T.

Values of the dielectric measurement does not uniquely correspond to viscosity or elastic modulus, but the dielectric measurement is useful for describing a curing profile of a thermosetting resin, which varies from a low viscosity liquid to high modulus amorphous solid. In the dielectric measurement, the curing profile is determined from a time change of an ionic viscosity (equivalent resistivity) calculated from a complex dielectric constant which is measured by applying a high-frequency electric field to the thermosetting resin.

As the dielectric measurement device, for example, MDE-10 curing monitor manufactured by Holometrix-Micromet can be used. As for a measuring method, first, the O-ring made of Viton, having an internal diameter of 32 mm and a thickness of 3 mm, is placed on the lower plane of the programmable mini-press MP2000, in which the TMS-1 inch sensor has been buried, and the temperature of the press is set at a predetermined temperature T. Next, the epoxy resin composition is poured into the inside of the O-ring, and the press is closed. The time change of ionic viscosity of the resin composition is monitored. The dielectric measurement is carried out at the frequencies of 1, 10, 100, 1,000 and 10,000 Hz, and logarithm log ($\sigma$) of the frequency-independent ionic viscosity is obtained by using a software (EUMETRIC) provided in the device.

A cure index during a time t required for curing is determined from the equation (4), and the time required for a cure index to reach 10% was denoted by $t_{10}$ and the time required for a cure index to reach 90% was denoted by $t_{90}$.

$$\text{Cure index} = \{ \log(\alpha t) - \log(\alpha \min) \} / \{ \log(\alpha \max) - \log(\alpha \min) \} \times 100 \quad (4)$$

Cure index: (unit: %)
$\alpha t$: ionic viscosity at a time t (unit: $\Omega \cdot cm$)
$\alpha \min$: minimum value of ionic viscosity (unit: $\Omega \cdot cm$)
$\alpha \max$: maximum value of ionic viscosity (unit: $\Omega \cdot cm$)

Monitoring of the ionic viscosity by dielectric measurement is relatively easy even when a curing reaction is fast. Furthermore, since the ionic viscosity can be also measured after gelation, and has a property of increasing as curing proceeds and being saturated with the completion of curing, it can be used to monitor not only an initial change in viscosity but also the progress of a curing reaction. As described above, a logarithmic value of the ionic viscosity, which is normalized in such a way that a minimum value is 0% and a saturated value (a maximum value) is 100%, is called the cure index, and this index is used to describe a curing profile of a thermosetting resin. If the time required for a cure index to reach 10% is used as an index related to the rate of initial increase in viscosity, and the time required for a cure index to reach 90% is used as an index related to the curing time, it is possible to state a preferable conditions for a small initial increase in viscosity and for curing in a short time.

To sum up the meaning of the above-mentioned three relational expressions defined in the present invention, in the specific temperature T, $t_{10}$ proportional to a time during which the epoxy resin composition can fluidize (a time when fluidization is possible) is 1 minute or more and 10 minute or less (equation (1)), $t_{90}$ proportional to a time, at which curing of the epoxy resin composition is almost completed and the removal of the mold becomes possible (a time when the removal of the molding tool is possible), is 3 minute or more and 30 minute or less (equation (2)), and a ratio of the time when the removal of the molding tool is possible to the time at which fluidization of the epoxy resin composition is possible is larger than 1 and 3 or less (equation (3)). That is, in the above-mentioned range, when the $t_{10}$ is large, the epoxy resin composition is easily impregnated with the reinforcing fiber base material, and when the $t_{90}$ is small, this means that the rate of curing of the epoxy resin composition is fast, and therefore a value of $t_{90}/t_{10}$ is larger than 1 and more preferably becomes smaller in a range of 3 or less.

In consideration of a balance with a molding temperature described later, the specific temperature T is preferably in a range of 90 to 130°C.

In the epoxy resin composition of the present invention, it is preferable that in color tone obtained by measuring a resin cured product which is prepared by curing the epoxy resin composition at 100°C for 20 minutes with a multi-light source spectrophotometer, the relational expressions of $|a^*| \leq 2$ and $|b^*| \leq 5$ hold with a test piece of 2 mm in thickness. In this color tone, if a* is deviated in a positive direction from this range, the resin is colored red, and if a* is deviated in a negative direction, the resin is colored green. Further, if b* is deviated in a positive direction from this range, the resin is colored yellow, and if b* is deviated in a negative direction, the resin is colored blue. That is, when the resin cured product obtained by using the epoxy resin composition of the present invention falls within the above range, it has advantages that in the case of making the reinforcing fiber visible apparently to use the fiber-reinforced composite material to decoration or design, a transparent feel of the fiber-reinforced composite material is increased and a hue hardly becomes uneven even though a thickness of a resin is uneven. From the viewpoint of this, a* and b* are preferably closer to zero. The curing time refers to the time between a point of beginning injecting the epoxy resin composition into a molding tool and a point of beginning removing a molding tool.

Measurement of color tone of the resin cured product is performed, for example, as follows. First, a test piece having a size of 30 mm × 30 mm (square) × 2 mm (in thickness) cut off from the resin cured plate is used, and the color tone of the resin cured plate is expressed in an L*a*b* colorimetric system (L*a*b* colorimetric system is used to express a color of a substance, lightness is expressed by L*, and chromaticity is expressed by a* and b*. Here, a* indicates a direction of red, -a* indicates a direction of green, b* indicates a direction of yellow, and -b* indicates a direction of blue) specified by JIS Z 8729 (2004) with a multi-light source spectrophotometer (MSC-P manufactured by SUGA TEST INSTRUMENTS Co., Ltd.). Spectral transmittance is measured under the conditions of transmitted light mode, C light source, visual field of 2°, incident angle of 8° and not including specular reflection light at a wavelength range of 380 to 780 nm.

The color tone of the resin cured product is affected by a molecular structure and a heating value of reaction of each component excluding effects of impurities in the epoxy resin composition, and there are tendencies to be colored red by an aromatic amine structure, to be colored yellow by an aromatic ether structure, and to become dense in color if the heating value is much. That is, since an amount of the nitrogen atom containing compound, the heating value of reaction by the curing accelerator containing nitrogen, or the heating value of reaction of the polymerizable unsaturated group adversely affects the color tone, the contained amounts of these compounds are preferably small.

In the epoxy resin composition of the present invention, a Tg of the resin cured product cured at 100°C for 20 minutes is preferably 90 to 150°C. By being the Tg to a temperature of 90°C or higher, heat resistance of the resin cured product is secured, and by being the Tg to a temperature of 150°C or lower, the shrinkage of the epoxy resin composition due to curing is inhibited, and further, the deterioration of surface quality of the fiber-reinforced composite material, derived from difference in coefficients of thermal expansion between the epoxy resin composition and the reinforcing fiber, can be prevented. Further, the Tg is more preferably 100 to 150°C from the viewpoint of relationship between the heat resistance and the surface quality. As described above, the curing time means the time between a point of beginning injecting the epoxy resin composition into a molding tool and a point of beginning removing a molding tool.

Tg of the resin cured product obtained by using the epoxy resin composition of the present invention is a value measured at a temperature raising rate of 40°C/min with a DSC apparatus. More specifically, in a portion exhibiting a stepwise change of a DSC curve obtained, a temperature of the intersection of a straight line which is a set of points equally distant in a direction of vertical axis from a extended line of a base line and a curved line of a portion with a stepwise change of glass transition is designated as Tg. There are many measuring methods of Tg, for example, in addition to a method of using a DSC apparatus, there are a method of using a TMA apparatus, based on thermal expansion, a method of using a DMA apparatus, based on viscoelasticity, and the like, but measurement may vary from method to method due to the difference in measurement principles . Further, in measurement which utilizes the absorption of heat by the DSC apparatus, since a temperature raising rate has an effect on measured values, a value determined by the above-mentioned measurement condition is designated as a Tg in the present invention.

The epoxy resin composition of the present invention is characterized in that an initial increase in viscosity is small, a time during which the resin composition can be injected is long, and the resin composition can be cured in a short time. Therefore, it is most suitable for the RTM method in which a mold temperature is maintained constantly during a process from the injection of a resin to the demolding, but it can be applied to all molding methods to use a liquid thermosetting resin such as an RTM method in which an injected resin is cured by elevating its temperature, and a hand lay-up method, a pultrusion method and a filament winding method, and the like other than the RTM method, and it has effects of shortening a molding time and improving an impregnation property of the reinforcing fiber in any molding method.

Next, an example of a method of producing a fiber-reinforced composite material by using the epoxy resin composition of the present invention will be described.

The fiber-reinforced composite material of the present invention is preferably produced by injecting the warmed epoxy resin composition into a reinforcing fiber substrate disposed in a molding tool heated to a specific temperature T, impregnating the reinforcing fiber substrate with the epoxy resin composition, and curing the epoxy resin composition in the molding tool.

Here, the reason why the epoxy resin composition of the present invention preferably satisfies the relational expressions of the equations (1) to (3) described above in the specific temperature T will be described again in consideration of a relation to the above production method of the fiber-reinforced composite material.

When the specific temperature T satisfying the relational expressions of the equations (1) to (3) described above exists, by selecting the specific temperature T as a temperature of the molding tool, a behavior of curing of a resin is expressed by the equations (1) to (3). That is, since $t_{10}$ has a proportional relationship with a time during which the resin can be injected into the reinforcing fiber substrate and can be impregnated with the reinforcing fiber substrate, the equation (1) shows that it is possible to secure a sufficient time for injecting the epoxy resin composition into a reinforcing fiber substrate disposed in a molding tool heated to a specific temperature T, and impregnating the epoxy resin composition with the reinforcing fiber substrate. Next, since $t_{90}$ has a proportional relationship with a time between the beginning of the injection and removing a mold after completing much of curing, the equation (2) shows that it is possible to bring the epoxy resin composition to a cured state in which a molding tool can be removed in a short time (to shorten a molding cycle) in a molding tool heated to a specific temperature T. Furthermore, a ratio $t_{90}/t_{10}$ represents a ratio between the above-mentioned times, and the equation (3) shows that it is possible to secure a sufficient time for injecting the epoxy resin composition into a reinforcing fiber substrate and impregnating the resin composition with the reinforcing fiber substrate if heating the molding tool to a specific temperature T, and also shows that it is possible to bring the epoxy resin composition to a cured state in which a molding tool can be removed in a short time (to shorten a molding cycle), which is a conflicting characteristic. Thus, the present invention enables to pursue a good impregnation property and the reduction molding cycle simultaneously, which are conventionally incompatible with each other, by heating a molding tool to a specific temperature T and using the epoxy resin composition of the present invention.

A molding temperature (heat-curing temperature) of epoxy resin composition, that is, the specific temperature T is preferably 90 to 130°C. By being the specific temperature T to a temperature of 90 to 130°C, a time required for curing is shortened and simultaneously heat shrinkage after removing a mold is mitigated, and thereby a fiber-reinforced composite material of high surface quality can be obtained.

A temperature to which the epoxy resin composition is heated is determined from a relationship between initial viscosity and an increase in viscosity of the epoxy resin composition in terms of the impregnation to the reinforcing fiber substrate, and preferably 40 to 70°C, and more preferably 50 to 60°C.

In such a production method of such the fiber-reinforced composite material, it is preferable to select an appropriate condition, for example, a molding tool having a plurality of injection ports is employed and an epoxy resin composition is injected simultaneously or sequentially at intervals through a plurality of injection ports, depending on the desired fiber-reinforced composite material since flexibility capable of responding to molded articles with various shapes and sizes can be achieved. The restrictions are not imposed on number and shapes of the injection ports, but more injection ports are preferable in order to enable the injection in a short time, and with respect to their arrangement, such a position that a length through which a resin is fluidized can be reduced depending on the shape of a molded article is preferable.

The epoxy resin composition used for the production method of the fiber-reinforced composite material is preferably prepared by warming a solution a containing the epoxy resin [A} and a solution b containing the acid anhydride curing agent [B] separately, mixing these two solutions with a mixer just before injection, and injecting the resulting mixture from the viewpoint of a pot life of a resin. The curing accelerator [C] and other mixed component may be mixed in any one of the solution a and the solution b, and it may be mixed in either of the solutions a and b in advance to be used.

An injection pressure of the epoxy resin composition is usually 0.1 to 1. 0 MPa, and a VaRTM (vacuum assist resin transfer molding) method for injecting the resin composition by evacuating the inside of the mold to vacuum can be also employed, but from the viewpoint of an injecting time and economy of facilities, the injection pressure is preferably usually 0.1 to 0.6 MPa. Further, even if the injection is performed under pressure, when the inside of the mold is evacuated to vacuum before the resin composition is injected, it is preferable since it is possible to prevent the voids from being produced.

Next, an example of the fiber-reinforced composite material obtained by using the epoxy resin composition of the present invention and the reinforcing fiber will be described.

In the fiber-reinforced composite material of the present invention, as a reinforcing fiber, glass fibers, aramid fibers, carbon fibers and boron fibers are suitably used. Among them, carbon fibers are suitably used because fiber-reinforced composite materials of lightweight and good mechanical properties, such as strength and elastic modulus, are obtained.

The reinforcing fiber may be staple fibers or continuous fibers, and these fibers may be used in combination. Continuous fibers are preferable in order to obtain high Vf fiber-reinforced composite materials.

In the fiber-reinforced composite materials of the present invention, the reinforcing fibers may be used in the form of strands. However, reinforcing fiber substrates in which reinforcing fibers are processed in a form of mats, woven fabrics, knits, braids or unidirectional sheet are suitably used. Among them, woven fabrics are suitably used because fiber-reinforced composite materials having high Vf can be easily obtained, and their handling is easy.

A ratio of real volume of the reinforcing fibers to apparent volume of the woven fabrics is designated as packing fraction of the woven fabrics. The packing fraction is determined by the equation $W / (1000\ t\cdot\rho f)$, wherein W represents mass per unit area (unit: $g/cm^2$), t represents thickness (mm), and $\rho f$ represents a density of the reinforcing fibers (unit: $g/cm^3$). The mass per unit area and thickness of the woven fabrics are determined according to JIS R 7602 (1995). Since it is easy to produce fiber-reinforced composite materials having high Vf from fabrics with high packing fraction, the packing fraction of the woven fabrics is 0.10 to 0.85, preferably 0.40 to 0.85, and more preferably 0.50 to 0.85.

In order to obtain fiber-reinforced composite materials of the present invention which have high specific strength and specific elastic modulus, fiber volume fraction Vf thereof is 40 to 85%, and preferably 45 to 85%. The fiber volume fraction Vf of the fiber-reinforced composite material as used herein is a value defined as follows and measured according to ASTM D 3171 (1999), and refers to the Vf in a state after injecting the epoxy resin composition into a reinforcing fiber substrate and curing it. That is, the fiber volume fraction Vf of the fiber-reinforced composite material can be determined from a thickness h of the fiber-reinforced composite material by using the following equation.

$$\texttt{Fiber volume fraction Vf (\%) = (Af } \times \texttt{ N) / (}\rho\texttt{f } \times \texttt{ h) /10}$$

Af: weight per 1 $m^2$ of one fiber substrate $(g/m^2)$
N: number of laminated fiber substrates
$\rho f$: density of the reinforcing fiber $(g/m^3)$
h: thickness of the fiber-reinforced composite material (test piece) (mm)

When the weight Af per 1 $m^2$ of one fiber substrate, the number N of laminated fiber substrates, and the density $\rho f$ of the reinforcing fiber are not known, the fiber volume fraction of the fiber-reinforced composite material is measured according to any one of a combustion method or a nitrate decomposing method based on JIS K 7075 (1991) or a sulfate decomposing method. For the density of the reinforcing fiber used in this case, a value measured according to JIS R 7603 (1999) is used.

A specific measuring method of a thickness h of the fiber-reinforced composite material is not particularly limited as long as it is a method which can measure the thickness of the fiber-reinforced composite material exactly, but it is preferable to measure with a micrometer specified in JIS B 7502 (1994) or an instrument having precision equal to or superior to the above-mentioned micrometer as described in JIS K 7072 (1991). When the thickness cannot be measure because of the complicated shape of the fiber-reinforced composite material, a sample (sample having a certain level of shape and a certain level of size for measuring) may be cut off from the fiber-reinforced composite material and the sample may be measured.

The fiber-reinforced composite material obtained by using the epoxy resin composition of the present invention preferably consists of reinforcing fibers and the resin cured product whose color tone determined with a multi-light source spectrophotometer satisfies the relational expressions of $|a^*| \leq 2$ and $|b^*| \leq 5$ in a test piece of 2 mm in thickness. Meanings of a* and b* are as described above. If a* is deviated in a positive direction from this range, the resin is colored red and if a* is deviated in a negative direction, the resin is colored green, and if b* is deviated in a positive direction from this range, the resin is colored yellow and if b* is deviated in a negative direction, the resin is colored blue. Therefore, when the resin cured product falls within the above range, it has advantages that in the case of making the reinforcing fiber visible apparently to use the fiber-reinforced composite material to decoration or design, a transparent feel of the fiber-reinforced composite material is increased and a hue hardly becomes uneven even though a thickness of a resin is uneven. From the viewpoint of this, a* and b* are preferably closer to zero.

As a means of confirming, from the resulting fiber-reinforced composite material, that the color tone, determined with a multi-light source spectrophotometer, of the resin cured product constituting the fiber-reinforced composite material satisfies the relational expressions of $|a^*| \leq 2$ and $|b^*| \leq 5$ in a test piece of 2 mm in thickness, a technique, in which the same resin composition as that used for molding of the fiber-reinforced composite material is used, a test piece of 2 mm in thickness is formed from this resin composition and cured at 100°C for 20 minutes, and the color tone of the cured test piece is measured. The color tone of the resin cured product prepared in this time may be measured as described above.

A Tg of the fiber-reinforced composite material of the present invention, or a Tg of the resin cured product constituting the fiber-reinforced composite material is preferably 90 to 150°C. As described above, by being the Tg to a temperature of 90°C or higher, heat resistance of the resin cured product is secured, and by being the Tg at a temperature to 150°C or lower, the shrinkage of the epoxy resin composition due to curing is inhibited, and further, the deterioration of surface quality of the fiber-reinforced composite material, which is derived from difference in coefficients of thermal expansion between the epoxy resin composition and the reinforcing fiber, can be prevented. Further, the Tg is more preferably 100 to 140°C from the viewpoint of relationship between the heat resistance and the surface quality.

As a means of confirming, from the resulting fiber-reinforced composite material, that a Tg of the resin cured product constituting the fiber-reinforced composite material is 90 to 150°C, a method of shaving out a test piece of about 20 mg including the resin cured substance from the fiber-reinforced composite material is employed. The Tg of the fiber-reinforced composite material and the Tg of the resin cured product constituting the fiber-reinforced composite material may be measured as described above.

The Tg of the fiber-reinforced composite material or the Tg of the resin cured product constituting the fiber-reinforced composite material is affected by components constituting the epoxy resin composition or a curing temperature, but the mixed amounts of polyfunctional epoxy resins, such as aromatic aminoglycidyl epoxy resin contained in the epoxy resin composition, are preferably small, and the curing temperature is preferably in a range of 90 to 130°C, and more preferably in a range of 90 to 120°C.

The preferred embodiment of the fiber-reinforced composite material of the present invention includes amonolithic plate. Further, another preferred embodiment of the fiber-reinforced composite material includes a sandwich structure in which the monolithic plate-like fiber-reinforced composite materials are positioned on both surfaces of the core material, a hollow structure whose periphery is covered with the monolithic plate-like structure, and a canape structure in which monolithic plate-like fiber-reinforced composite material is located on one surface of the core.

Examples of the core materials of the sandwich structure and the canape structure include honeycomb cores made of aluminum or aramid, foam cores made of polyurethane, polystyrene, polyamide, polyimide, polyvinyl chloride, phenolic resin, acrylic resin, or epoxy resin, and woods such as balsa. Among them, foam cores are suitably used as a core material because the fiber-reinforced composite material of lightweight is obtained from this foam core.

In order to obtain the fiber-reinforced composite material of lightweight, the density of the core material is 0.02 to 0.9 g/cm$^3$, and preferably 0.02 to 0.5 g/cm$^3$. The density of the core material is determined according to ISO 845 (1988).

When the glass transition temperature of the core material is low, the deformation of the core may occur during molding, and therefore the glass transition temperature of the core material is 100°C or higher, preferably 120°C or higher, and more preferably 140°C or higher.

When shear modulus of elasticity of the core material is high, the flexural stiffness of the fiber-reinforced composite material of the sandwich structure becomes high, and therefore the shear modulus of elasticity of the core material is 2.0 MPa or more, preferably 4.0 MPa or more, and more preferably 6.0 MPa or more. The shear modulus of elasticity of the core material is determined according to ASTM C 273 (2000).

When the closed cell fraction of the core material is high, the resin composition hardly penetrates into the core, and therefore the closed cell fraction of the core material is 0.70 or more, preferably 0.80 or more, and more preferably 0.90 or more. The closed cell fraction of the core material is determined according to ISO 4590 (2002).

When the fiber-reinforced composite material of the present invention is used in design aspect such as the automobile's exterior body panels, the asperity of the fiber-reinforced composite material is 3 $\mu$m or less, and preferably 2 $\mu$m or less. The asperity is measured according to JIS B 0601 (1994), and if the asperity is expressed by Rmax, this agrees with the apparent quality of the fiber-reinforced composite material.

Since the fiber-reinforced composite material according to the present invention is lightweight, and excellent in mechanical properties such as strength and elastic modulus, it is preferably used for structural members of airplanes, space satellites, industrial machines, railroad vehicles, marine vessels, automobiiles, or exterior body panels. Further, since the fiber-reinforced composite material according to the present invention also has excellent color tone and surface quality, it is particularly preferably used for the application to the automobile's exterior body panels.

Examples

Hereinafter, the present invention will be described more specifically by way of examples.

<Resin raw material>

The following resin raw materials were used.

1 Epoxy resin

(1) Epoxy resin containing neither nitrogen atom nor polymerizable unsaturated group

- "jER (registered trade mark)" 828 (produced by Japan Epoxy Resins Co., Ltd., bisphenol A epoxy resin, epoxy equivalent weight 189)
- "jER (registered trade mark)" 807 (produced by Japan Epoxy Resins Co., Ltd., bisphenol F epoxy resin, epoxy equivalent weight 168)
- "CELLOXIDE (registered trade mark)" 2021P (produced by DAICEL CHEMICAL INDUSTRIES, Ltd., oxirane ring epoxy resin, epoxy equivalent weight 137)

(2) Epoxy resin containing nitrogen atom

- TETRAD-X (produced by MITSUBISHI GAS CHEMICAL COMPANY, INC., N,N,N',N'-tetraglycidyl-m-xylylenediamine, epoxy equivalent weight 100)

(3) Epoxy resin containing polymerizable unsaturated group

- SY MONOMER G (produced by Sakamoto Yakuhin Kogyo Co., Ltd., glycidylmethacrylate, epoxy equivalent weight 144)
- R-7038 (produced by Nippon Kayaku Co., Ltd., 1,6-hexanediol diglycidyl ether acrylate, epoxy equivalent weight 237)

2 Acid anhydride curing agent

- "RIKACID (registered trade mark)" MT-500 (produced by New Japan Chemical Co., Ltd., methyltetrahydrophthalic anhydride)
- "RIKACID (registered trade mark)" MH-700 (produced by New Japan Chemical Co., Ltd., methylhexahydrophthalic anhydride)
- "RIKACID (registered trade mark) "MTA-15 (produced by New Japan Chemical Co., Ltd., glycerolbis(anhydrotrimellitate) monoacetate

3 Organic phosphorus compound (curing accelerator)

- Tris(2,6-dimethoxyphenyl)phosphine (produced by HOKKO CHEMICAL INDUSTRY Co., Ltd.)
- 1,3-bis(diphenylphosphino)propane (produced by HOKKO CHEMICAL INDUSTRY Co., Ltd.)
- Triphenylphosphine triphenylborane (produced by HOKKO CHEMICAL INDUSTRY Co., Ltd.)
- Tetraphenylphosphino tetraphenylborate (produced by HOKKO CHEMICAL INDUSTRY CO.,LTD.)
- Triphenylphosphine (produced by HOKKO CHEMICAL INDUSTRY CO.,LTD.)
- Tris(p-methylphenyl)phosphine (produced by HOKKO CHEMICAL INDUSTRY CO.,LTD.)

4 Other mixed substances ((curing accelerator, and the like)

- "CUREZOL (registered trade mark) " 2E4MZ (produced by SHIKOKU CHEMICALS Corp., 2-ethyl-4-methylimidazole)
- U-CAT SA1 (produced by SAN-APRO Ltd., diazabicycloundecene-phenol salt)
- Polymerization initiator ("PERHEXA (registered trade mark)" 3M, produced by Nippon Oil & Fats Co., Ltd.)
- Polymerization retarder ("Methoquinone (registered trade mark)" MQ, produced by Kawaguchi Chemical Industry Co,. Ltd.)

<Preparation of epoxy resin composition>

Epoxy resins were mixed in a mixing ratio shown in Tables 1 and 2 by using raw materials in Tables 1 and 2 to form a solution a. Acid anhydride curing agents, organic phosphorus compounds, and other mixed substances were mixed in a mixing ratio shown in Tables 1 and 2 by using raw materials in Tables 1 and 2 to form a solution b.

These solution a and solution b were mixed in a mixing ratio shown in Tables 1 and 2 to prepare epoxy resin compositions .

<Element contained amount>

Each element contained amount was determined from mixed substances in the epoxy resin composition and a mixing ratio of the mixed substances. Specifically, when a phosphorus atom contained amount in the epoxy resin composition was denoted by $R_P$ (% by weight), a nitrogen atom contained amount was denoted by $R_N$ (% by weight), and an amount of a compound having a polymerizable unsaturated group was denoted by $R_U$ (% by weight), they were calculated from the following equations.

$$R_P = W_C \times (31 / MW_C) / W_S \times 100$$

$$R_N = ((W_{A2} \times 14 / MW_{N1}) + (W_D \times 14 / MW_{N2})) / W_S \times 100$$

$$R_U = (W_{A3} + W_E) / W_S \times 100$$

$W_{A1}$: Total parts by weight of an epoxy resin [A1] containing neither a nitrogen atom nor a polymerizable unsaturated group in the epoxy resin composition

$W_{A2}$: Total parts by weight of an epoxy resin [A2] containing a nitrogen atom in the epoxy resin composition

$W_{A3}$: Total parts by weight of an epoxy resin [A3] containing a polymerizable unsaturated group in the epoxy resin composition

$W_A$: ($W_{A1}$ + $W_{A2}$ + $W_{A3}$)

$W_B$: Total parts by weight of an acid anhydride compound [B] in the epoxy resin composition

$W_C$: Total parts by weight of an organic phosphorus compound [C] in the epoxy resin composition

$W_D$: Total parts by weight of a nitrogen atom containing compound, other than the epoxy resin [A2], containing a nitrogen atom in the epoxy resin composition

$W_E$: Total parts by weight of a compound having a polymerizable unsaturated group, other than the epoxy resin [A3], containing a polymerizable unsaturated group in the epoxy resin composition

$W_F$: Total parts by weight of other mixed substances in the epoxy resin composition

$W_S$: ($W_A$ + $W_B$ + $W_C$ + $W_D$ + $W_E$ + $W_F$)

$MW_C$: Molecular weight of an organic phosphorus compound [C]

$MW_{N1}$: Molecular weight of an epoxy resin [A2] containing a nitrogen atom in the epoxy resin composition

$MW_{N2}$: Molecular weight of a nitrogen atom containing compound, other than an epoxy resin, containing a nitrogen atom in the epoxy resin composition

Atomic weight of phosphorus: 31

Atomic weight of nitrogen: 14

<Measurement of viscosity of resin composition>

Viscosity of the epoxy resin composition jut after preparing the epoxy resin composition was measured according to a measuring method of using a cone-plate type viscometer in ISO 2884-1 (1994). As a measuring apparatus, TVE-30H manufactured by TOKI SANGYO Co., Ltd. was used. Here, the rotor used was 1º 34' × R24 and an amount of each sample was 1 cm$^3$.

<Dielectric measurement>

In the present example, the dielectric measurement was carried out in order to monitor curing of a resin.

As the dielectric measurement device, an MDE-10 curing monitor manufactured by Holometrix-Micromet was used. The O-ring made of Viton, having an internal diameter of 32 mm and a thickness of 3.3 mm, was placed on the lower surface of the programmable mini-press MP2000, in which a TMS-1 inch sensor was buried, the temperature of the press was set at 100ºC, the epoxy resin composition was poured into the inside of the O-ring, and the press was closed to monitor the time change of ionic viscosity of the resin composition. The dielectric measurement was carried out at the frequencies of 1, 10, 100, 1, 000 and 10, 000 Hz.

Next, a cure index was determined from the equation (4), and a ratio $t_{90}/t_{10}$ of the time $t_{90}$ required for a cure index to reach 90% to the time $t_{10}$ required for a cure index to reach 10% was determined.

$$Cure\ index = \{\ log\,(\alpha t) - log\,(\alpha min)\ \} / \{\ log\,(\alpha max) - log\,(\alpha min)$$

$$\}\times 100\ (4)$$

Cure index: (unit: %)
$\alpha t$: ionic viscosity at a time t (unit: $\Omega \cdot cm$)
$\alpha min$: minimum value of ionic viscosity (unit: $\Omega \cdot cm$)
$\alpha max$: maximum value of ionic viscosity (unit: $\Omega \cdot cm$)

<Preparation of resin cured plate>

Stainless steel spacers having a size of 150 mm $\times$ 150 mm (square) $\times$ 2 mm (in thickness) were installed at the lower plate of a press, a temperature of the press was set at 100°C, the epoxy resin composition was poured into the inside of the spacer, and the press was closed. The press was opened after 20 minutes to obtain a cured resin plate.

<Measurement of glass transition temperature Tg of resin cured product>

A test piece of 20 mg was shaved out from the resin cured plate, and Tg thereof was measured at a temperature raising rate of 40°C/min with DSC (Pyris 1 manufactured by PerkinElmer Japan Co., Ltd.).

<Measurement of color tone>

A test piece having a size of 30 mm $\times$ 30 mm (square) $\times$ 2 mm (in thickness) cut off from the resin cured plate was used, and the color tone of the resin cured plate was expressed in an L*a*b* colorimetric system (an L*a*b* colorimetric system is used to express a color of a substance, lightness is expressed by L*, and chromaticity is expressed by a* and b*. Here, a* indicates a direction of red, -a* indicates a direction of green, b* indicates a direction of yellow, and -b* indicates a direction of blue) with a multi-light source spectrophotometer (MSC-P manufactured by SUGA TEST INSTRUMENTS Co., Ltd.). Spectral transmittance was measured under the conditions of transmitted light mode, C light source, visual field of 2°, incident angle of 8° and not including specular reflection light at a wavelength range of 380 to 780 nm.

<Preparation 1 of fiber-reinforced composite material>

As the fiber-reinforced composite material for mechanical tests, a material prepared by the following RTM molding method was used.

Nine sheets of carbon fiber fabrics CO6343 (carbon fiber: T300-3K, texture: plain weave, mass per unit area: 198 g/cm$^2$, produced by Toray Industries, Inc.) as a reinforcing fiber were laminated and placed in a mold with a plate-shaped cavity of 350 mm $\times$ 700 mm $\times$ 2 mm, and laminated sheets were subjected to mold clamping by a press device. Next, the pressure of the inside of the mold kept at 100°C (molding temperature) was reduced to an atmospheric pressure (0.1 MPa) with a vacuum pump, and the solution a and the solution b of the epoxy resin compositions, which had been previously heated to 50°C, were mixed and the resulting mixture was injected in the mold at a pressure of 0.2 MPa with a resin injecting machine. The mold was opened after 20 minutes (curing time) followed by beginning injecting the epoxy resin composition, and the mold was removed to obtain a fiber-reinforced composite material.

<Measurement of fiber volume fraction (Vf) of fiber-reinforced composite material>

The Vf (%) of the fiber-reinforced composite material was determined from the following equation according to ASTM D 3171 (1999).

$$Vf\ (\%)\ =\ (Af\ \times\ N)\ /\ (\rho f\ \times\ h)/10$$

Here, Af: weight per 1 m$^2$ of one fiber substrate (g/m$^2$), N: number of laminated fiber substrates, pf: density of the reinforcing fiber (g/m$^3$), and h: thickness of a test piece (mm) .

<Tensile test of fiber-reinforced composite material>

Tensile test was carried out according to ISO 527-1-2-5 (1993). The material tester used for this test was Instron 4208 manufactured by Instron Japan Co. Ltd. The test was carried out under the conditions of span space 150 mm, grip length 50 mm and tensile speed 2 mm/min with a strain gauge KFG-20-120-C1-11 manufactured by KYOWA ELECTRONIC INSTRUMENTS Co., Ltd. bonded to the test piece. Actual measurements of tensile strength and tensile modulus were converted to the Vf (fiber volume fraction) = 60% basis by use of the equation of (actual measurements of tensile strength, tensile tensile modulus/actual measurement of Vf × 60), and the resulting values were compared to each other.

<Measurement of glass transition temperature Tg of fiber-reinforced composite material>

A test piece of 20 mg was shaved out from the fiber-reinforced composite material obtained above, and Tg thereof was measured at a temperature raising rate of 40°C/min with DSC (Pyris 1 manufactured by PerkinElmer Japan Co., Ltd.).

<Preparation 2 of fiber-reinforced composite material>

As the fiber-reinforced composite material for large member molding tests, a material prepared by the following RTM molding method was used.

Nine sheets of carbon fiber fabrics BT70-30 (carbon fiber: T700-12K, texture: plain weave, mass per unit area: 300 g/cm$^2$, produced by Toray Industries, Inc.) as a reinforcing fiber were laminated and placed in a mold with a plate-shaped cavity of 1500 mm × 1200 mm × 3 mm, and laminated sheets were subjected to mold clamping by a press device. Next, the pressure of the inside of the mold kept at 100°C (molding temperature) was reduced to an atmospheric pressure (0.1 MPa) with a vacuum pump, and the solution a and the solution b of the epoxy resin compositions, which had been previously heated to 50°C, were mixed and the resulting mixture was injected in the mold at a pressure of 0.2 MPa with a resin injecting machine. The mold was opened after 20 minutes (curing time) followed by beginning injecting the epoxy resin composition, and the mold was removed to obtain a fiber-reinforced composite material. Coloring, a packing property and a number of pinholes were visually observed, and the asperity was measured by a method described below.

<Asperity of fiber-reinforced composite material>

The asperity of the fiber-reinforced composite material was measured according to JIS B 0601 (1994), and the asperity was expressed by Rmax. Surfcorder SE3400 manufactured by Kosaka Laboratory Ltd. was used as the measuring device.

(Examples 1 to 11)

As shown in Table 1, it can be seen that since in the epoxy resin composition of the present invention, a time, when fluidization is possible, denoted by $t_{10}$ is long, and a time, when the removal of the mold is possible, denoted by $t_{90}$ is short at a molding temperature (100°C), a value of $t_{90}/t_{10}$ becomes 3 or less, and therefore the epoxy resin composition of the present invention exhibits a high packing property in the fiber substrates and can reduce a molding time effectively in molding the fiber-reinforced composite material. Further, it can be also seen that the epoxy resin composition of the present invention is excellent in the color tone of the molded cured article and is suitable for automobile's parts and sporting goods, in which the reinforcing fiber is used in design aspect. Further, the fiber-reinforced composite material of the present invention using this epoxy resin composition had excellent mechanical properties and well-controlled heat resistance (glass transition temperature), and also exhibited a goodpacking property, less defective pinholes and good appearance (asperities, color tone) even in the large molded article.

Table 1

| | | | | | Example | | | | | | | | | |
| | | | | 1 | 2 | 3 | 4 | 5 | 6 | 7 | 8 | 9 | 10 | 11 |
|---|---|---|---|---|---|---|---|---|---|---|---|---|---|---|
| Solution a | Epoxy resin containing neither nitrogen atom nor polymerizable unsaturated group | | "jER (registered trade mark)" 828 (bisphenol A epoxy resin, epoxy equivalent weight 189) | 100 | | 100 | | | 50 | 100 | | 100 | | 100 |
| | | | "jER (registered trade mark)" 807 (bisphenol F epoxy resin, epoxy equivalent weight 168) | | 100 | | | 50 | 50 | | 100 | | 100 | |
| | | | "CELLOXIDE (registered trade mark)" 2021P (alicyclic epoxy resin, epoxy equivalent weight 137) | | | | 100 | 50 | | | | | | |
| Solution b | Acid anhydride curing agent | | "RIKACID (registered trade mark)" MT-500 (methyltetrahydrophthalic anhydride) | 90 | | | | | 110 | | 90 | 100 | | 50 |
| | | | "RIKACID (registered trade mark)" MH-700 (methylhexahydrophthalic anhydride) | | 100 | 90 | 120 | | 95 | | | 90 | | 90 |
| | | | "RIKACID (registered trade mark)" MTA-15 (glycerolbis(anhydrotrimellitate) monoacetate) | | | | | | | | | | 50 | |
| | Organic phosphorus compound (Curing accelerator) | | Tris(2,6-dimethoxyphenyl)phosphine | 8 | 10 | | | | | | | | 10 | |
| | | | 1,3-bis(diphenylphosphino)propane | | | 5 | 10 | 20 | | | | | | |
| | | | Triphenylphosphine triphenylborane | | | | | | | 15 | | | | |
| | | | Tetraphenylphosphine tetraphenylborate | | | | | | | | 20 | | | |
| | | | Triphenylphosphine | | | | | | | | | 10 | | |
| | | | Tris(p-methylphenyl)phosphine | | | | | | | | | 10 | | 6 |
| | Other mixed substances (Curing accelerator, and the like) | | "CUREZOL (registered trade mark)" 2E4MZ (2-ethyl-4-methylimidazole) | | | | | | | | | | | |
| | | | U-CAT SA1 (diazabicycloundecene-phenolic salt) | | | | | | | | | | | 4 |
| | | | Polymerization initiator ("PERHEXA (registered trade mark)" 3M) | | | | | | | | | | | |
| | | | Polymerization retarder ("Methoquinone (registered trade mark)" MQ) | | | | | | | | | | | |
| Element contained amount | | | Phosphorus atom [% by weight] | 0.28 | 0.33 | 0.39 | 0.65 | 1.31 | 0.44 | 0.45 | 0.56 | 0.51 | 0.33 | 0.31 |
| | | | Nitrogen atom [% by weight] | 0 | 0 | 0 | 0 | 0 | 0 | 0 | 0 | 0 | 0 | 0.23 |
| Molding characteristics | | | Viscosity at 25°C [Pa·s] | 0.5 | 0.36 | 0.55 | 0.14 | 0.18 | 0.46 | 0.52 | 0.32 | 0.55 | 0.96 | 0.96 |
| | | | t10 (minute): 100°C | 5 | 4.3 | 4.8 | 4.7 | 3.4 | 4.1 | 4.4 | 4.2 | 4.5 | 3.8 | |
| | | | t90 (minute): 100°C | 11.5 | 8.2 | 8.4 | 7.9 | 6.5 | 7.7 | 7.9 | 8.6 | 7.8 | 9.3 | 10.5 |
| | | | $t_{90}/t_{10}$: 100°C | 2.3 | 1.9 | 1.8 | 1.7 | 1.9 | 1.9 | 1.8 | 2.1 | 1.9 | 2.1 | 2.8 |
| Properties of resin cured product | | | Glass transition temperature Tg [°C] | 135 | 122 | 134 | 138 | 128 | 134 | 132 | 115 | 134 | 139 | 135 |
| | | | Lightness L* | 82 | 82 | 84 | 89 | 87 | 83 | 84 | 83 | 83 | 83 | 83 |
| | | | Chromaticity a* | -0.31 | -0.23 | -0.24 | -0.14 | -0.18 | -0.25 | -0.31 | -0.29 | -0.31 | -0.27 | -0.25 |
| | | | Chromaticity b* | 3.2 | 2.8 | 3.1 | 1.5 | 1.8 | 2.9 | 3.2 | 2.8 | 3 | 2.7 | 3.9 |
| Properties of composite material | | | Tensile strength [MPa](Vf=60% equivalent) | 710 | 720 | 730 | 710 | 680 | 720 | 720 | 710 | 730 | 710 | 720 |
| | | | Tensile modulus [GPa](Vf=60% equivalent) | 70 | 69 | 69 | 70 | 69 | 69 | 69 | 70 | 69 | 70 | 69 |
| | | | Glass transition temperature Tg [°C] | 133 | 120 | 132 | 136 | 125 | 131 | 129 | 113 | 132 | 137 | 133 |
| | | | Fiber volume fraction [%] | 54 | 55 | 54 | 57 | 57 | 54 | 55 | 54 | 55 | 56 | 56 |
| | | | Asperity of large molded article [μm] | 1.2 | 0.9 | 1.2 | 1.5 | 1.1 | 1.2 | 1 | 1 | 1.3 | 1.6 | 1.9 |
| | | | Surface color tone of large molded article | A | A | A | A | A | A | A | A | A | A | A |
| | | | Packing property of large molded article | A | A | A | A | A | A | A | A | A | A | A |
| | | | Pinhole of large molded article | A | A | A | A | B | A | A | A | A | A | A |

Surface color tone: A there is little coloring, B there is a little coloring, C there is coloring
Packing property: A good, B there is a little non-impregnated portion, C defective impregnation
Number of surface pinholes: A<10, B 10 to 100, C >100

(Examples 12 to 15)

Examples in which the fiber-reinforced composite material has been molded at a temperature other than 100°C for a time other than 20 minutes of a curing time are shown in Table 2. The molding temperature and the curing time are as shown in Table 2, and molding characteristics, characteristics of a resin cured product, and characteristics of a composite material are also values measured or observed under molding conditions shown in Table 2. As shown in Table 2, it can be seen that in the epoxy resin composition of the present invention, since a time when fluidization is possible is long, and a time when the removal of the mold is possible is short even at a temperature other than 100°C, the epoxy resin composition is extremely effective in improving a packing property in a fiber substrate and in shortening a molding time in the molding of the fiber-reinforced composite material.

Table 2

| | | | | Example | | | |
|---|---|---|---|---|---|---|---|
| | | | | 12 | 13 | 14 | 15 |
| Solution a | Epoxy resin containing neither nitrogen atom nor polymerizable unsaturated group | | "jER (registered trade mark)" 828 (bisphenol A epoxy resin, epoxy equivalent weight 189) | 50 | 50 | 100 | 100 |
| | | | "jER (registered trade mark)" 807 (bisphenol F epoxy resin, epoxy equivalent weight 168) | 50 | 50 | | |
| | | | "CELLOXIDE (registered trade mark)" 2021P (alicyclic epoxy resin, epoxy equivalent weight 137) | | | | |
| Solution b | Acid anhydride curing agent | | "RIKACID (registered trade mark)" MT-500 (methyltetrahydrophthalic anhydride) | | | 90 | 90 |
| | | | "RIKACID (registered trade mark)" MH-700 (methylhexahydrophthalic anhydride) | 95 | 95 | | |
| | | | "RIKACID (registered trade mark)" MTA-15 (glycerolbis(anhydrotrimellitate) monoacetate | | | | |
| | Organic phosphorus compound (Curing accelerator) | | Tris(2,6-dimethoxyphenyl)phosphine | | | | |
| | | | 1,3-bis(diphenylphosphino)propane | | | | |
| | | | Triphenylphosphine triphenylborane | 20 | 14 | | |
| | | | Tetraphenylphosphino tetraphenylborate | | | 25 | 18 |
| | | | Triphenylphosphine | | | | |
| | | | Tris(p-methylphenyl)phosphine | | | | |
| Element contained amount | | | Phosphorus atom [% by weight] | 0.53 | 0.41 | 0.55 | 0.41 |
| | | | Nitrogen atom [% by weight] | 0 | 0 | 0 | 0 |
| Molding characteristics | | | Molding temperature [°C] | 90 | 120 | 90 | 120 |
| | | | Curing time [min] | 30 | 10 | 30 | 10 |
| | | | Viscosity at 25°C [Pa·s] | 0.5 | 0.5 | 0.52 | 0.52 |
| | | | $t_{10}$ (minute): 100°C | 10 | 1.2 | 9.6 | 1.3 |
| | | | $t_{90}$ (minute): 100°C | 21 | 3.6 | 15.6 | 3.7 |
| | | | $t_{90}/t_{10}$ : 100°C | 2.1 | 3 | 1.6 | 2.8 |
| Properties of resin cured product | | | Glass transition temperature Tg [°C] | 121 | 145 | 122 | 144 |
| | | | Lightness L* | 86 | 80 | 84 | 80 |
| | | | Chromaticity a* | -0.31 | -0.23 | -0.24 | -0.14 |
| | | | Chromaticity b* | 3.2 | 2.8 | 3.1 | 1.5 |
| Properties of composite material | | | Tensile strength [MPa](Vf=60% equivalent) | 710 | 720 | 730 | 710 |
| | | | Tensile modulus [GPa](Vf=60% equivalent) | 70 | 69 | 69 | 70 |
| | | | Glass transition temperature Tg [°C] | 121 | 143 | 120 | 142 |
| | | | Fiber volume fraction [%] | 54 | 55 | 54 | 57 |
| | | | Asperity of large molded article[μm] | 0.9 | 1.5 | 1 | 1.5 |
| | | | Surface color tone of large molded article | A | A | A | A |
| | | | Packing property of large molded article | A | A | A | A |
| | | | Pinhole of large molded article | A | A | A | A |

Surface color tone: A there is little coloring, B there is a little coloring, C there is coloring
Packing property: A good, B there is a little non-impregnated portion, C defective impregnation
Number of surface pinholes: A<10, B 10 to 100, C >100

(Comparative Examples 1 to 6)

On the other hand, as shown in Table 2, the epoxy resin compositions out of the scope of the present invention or the fiber-reinforced composite materials using these epoxy resin compositions cannot achieve satisfactory results.

First, in Comparative Example 1 in which an amount of the mixed organic phosphorus compound is less than the range of the amounts of the present invention, the rate of curing is extremely slow, and this case is not suitable for the production of the fiber-reinforced composite material at all. Further, the resulting molded article had many pinholes and largish asperities, and this article was inadequate.

Next, in Comparative Examples 2 and 3 in which the curing accelerator containing a nitrogen atom was used and the nitrogen atom contained amount is out of the scope of the present invention, or Comparative Example 4 in which the nitrogen atom contained amount is out of the scope of the present invention since a large amount of aminoglycidyl epoxy resin is mixed, since a time, when fluidization is possible, denoted by $t_{10}$ is short, and a time, when the removal of the mold becomes possible, denoted by $t_{90}$ is long, a value of $t_{90}/t_{10}$ is larger than 3, and this case is not suitable particularly for the production of the fiber-reinforced composite material having a large size at all. Further, coloring of a resin cured product was intense, and the resulting molded article had many pinholes and largish asperities, and this article was inadequate.

Furthermore, in Comparative Examples 5 and 6 in which the epoxy resin having a polymerizable unsaturated group is mixed, since a time, when fluidization is possible, denoted by $t_{10}$ is short, and a time, when the removal of the mold is possible, denoted by $t_{90}$ is long, a value of $t_{90}/t_{10}$ is larger than 3, and this case is not suitable particularly for the production of the fiber-reinforced composite material having a large size at all. Further, the resulting molded article had many pinholes and an insufficient packing property, and further the molded article had extremely large asperities, and this article was inadequate.

Table 3

| | | | Comparative Example | | | | | |
|---|---|---|---|---|---|---|---|---|
| | | | 1 | 2 | 3 | 4 | 5 | 6 |
| Solution a | Epoxy resin containing neither nitrogen atom nor polymerizable unsaturated group | "jER (registered trade mark)" 828 (bisphenol A epoxy resin, epoxy equivalent weight 189) | 100 | | 100 | 50 | | |
| | | "jER (registered trade mark)" 807 (bisphenol F epoxy resin, epoxy equivalent weight 168) | | 100 | | | 50 | |
| | | "CELLOXIDE (registered trade mark)" 2021P (alicyclic epoxy resin, epoxy equivalent weight 137) | | | | | | 70 |
| | Epoxy resin containing nitrogen atom | TETRAD-X (N,N,N',N'-tetraglycidyl-m-xylylenediamine, epoxy equivalent weight 100) | | | | 50 | | |
| | Epoxy resin containing polymerizable unsaturated group | SY MONOMER G (glycidylmethacrylate, epoxy equivalent weight 144) | | | | | 50 | |
| | | R-7038 (1,6-hexanediol diglycidyl ether acrylate, epoxy equivalent weight 237) | | | | | | 30 |
| Solution b | Acid anhydride curing agent | "RIKACID (registered trade mark)" MT-500 (methyltetrahydrophthalic anhydride) | 90 | | | | 104 | |
| | | "RIKACID (registered trade mark)" MH-700 (methylhexahydrophthalic anhydride) | | 100 | 90 | | | |
| | | "RIKACID (registered trade mark)" MTA-15 (glycerolbis(anhydrotrimellitate) monoacetate) | | | | 140 | | 100 |
| | Organic phosphorus compound (Curing accelerator) | Tris(2,6-dimethoxyphenyl)phosphine | 2 | | | | | |
| | | 1,3-bis(diphenylphosphino)propane | | | | | | |
| | | Triphenylphosphine triphenylborane | | | | | | |
| | | Tetraphenylphosphino tetraphenylborate | | | | | | |
| | | Triphenylphosphine | | | | 10 | 10 | 10 |
| | | Tris(p-methylphenyl)phosphine | | | | | | |
| | Other mixed substances (Curing accelerator, etc) | "CUREZOL (registered trade mark)" 2E4MZ (2-ethyl-4-methylimidazole) | | 10 | | | | |
| | | U-CAT SA1 (diazabicycloundecene-phenolic salt) | | | 10 | | | |
| | | Polymerization initiator ("PERHEXA (registered trade mark)" 3M) | | | | | 1 | 1 |
| | | Polymerization retarder ("Methoquinone (registered trade mark)" MQ) | | | | | 0.2 | 0.5 |
| Element contained amount | | Phosphorus atom [% by weight] | 0.07 | 0 | 0 | 0.47 | 0.55 | 0.56 |
| | | Nitrogen atom [% by weight] | 0 | 1.09 | 0.57 | 1.55 | 0 | 0 |
| Molding characteristics | | Viscosity at 25°C [Pa·s] | 0.5 | 0.35 | 0.56 | 2.1 | 0.05 | 0.56 |
| | | $t_{10}$ (minute): 100°C | 21 | 1.8 | 2.4 | 1.9 | 1.7 | 1.8 |
| | | $t_{90}$ (minute): 100°C | 75 | 11.4 | 16.3 | 10.1 | 10.4 | 11.1 |
| | | $t_{90}/t_{10}$ : 100°C | 3.6 | 6.3 | 6.8 | 5.3 | 6.1 | 6.2 |
| Properties of resin cured product | | Glass transition temperature Tg [°C] | 129[Note 1)] | 139 | 136 | 168 | 170 | 182 |
| | | Lightness L* | 82[Note 1)] | 81 | 82 | 75 | 81 | 80 |
| | | Chromaticity a* | -0.3[Note 1)] | -0.31 | -0.16 | 2.4 | -0.27 | -0.24 |
| | | Chromaticity b* | 4.2[Note 1)] | 5.2 | 5.4 | 7.5 | 2.9 | 2.2 |
| Properties of composite material | | Tensile strength [MPa](Vf=60% equivalent) | 660[Note 2)] | 650 | 670 | 640 | 620 | 630 |
| | | Tensile modulus [GPa](Vf=60% equivalent) | 69[Note 2)] | 69 | 70 | 69 | 68 | 68 |
| | | Glass transition temperature Tg [°C] | 125[Note 2)] | 137 | 133 | 166 | 167 | 179 |
| | | Fiber volume fraction [%] | 55 | 55 | 55 | 53 | 56 | 55 |
| | | Asperity of large molded article[μm] | 2.4[Note 2)] | 3.5 | 3.1 | 4.9 | 7.8 | 8.5 |
| | | Surface color tone of large molded article | B[Note 2)] | B | B | C | B | A |
| | | Packing property of large molded article | A[Note 2)] | C | B | C | C | C |
| | | Pinhole of large molded article | C[Note 2)] | C | C | C | C | C |

Surface color tone: A there is little coloring, B there is a little coloring, C there is coloring
Packing property: A good, B there is a little non-impregnated portion, C defective impregnation
Number of surface pinholes: A<10, B 10 to 100, C >100
Note 1) Since a cured article could not be obtained due to defective curing in curing at 100°C for 20 minutes, a cured article was obtained by curing at 100°C for 120 minutes.
Note 2) Since a mold could not be removed due to defective curing in curing at 100°C for 20 minutes, a fiber-reinforced composite material was obtained by curing at 100°C for 120 minutes.

Industrial Applicability

The epoxy resin composition of the present invention is suitable for molding fiber-reinforced composite materials, and fiber-reinforced composite materials having high fiber volume fraction (Vf) and excellent mechanical properties and having excellent appearance and surface quality can be efficiently prepared in a short time by the RTM molding method. Further, the epoxy resin composition of the present invention is excellent in molding fiber-reinforced composite materials having a large size, and when the production methods of the present invention are combined, since it becomes possible to produce a larger member in a short time, it can be applied to members of many applications such as airplanes, space satellites, industrial machines, railroad vehicles, marine vessels, and automobiles, and, it is particularly suitable for application to the automobile members whose production amount is large.

**Claims**

1. Use of an epoxy resin composition for producing a fiber-reinforced composite material, the composition comprising an epoxy resin [A], an acid anhydride curing agent [B] and an organic phosphorus compound [C] in which one or more aromatic groups are directly bound to a phosphorus atom, wherein said organic phosphorus compound [C] is contained in an amount of 0.2 to 2% by weight in terms of a phosphorus atom contained amount with respect to the sum of said epoxy resin composition, an amount of a nitrogen atom containing compound contained in said epoxy resin composition is 0 to 0.5% by weight in terms of a nitrogen atom contained amount with respect to the sum of said epoxy resin composition, and an amount of a compound having a polymerizable unsaturated group contained in said epoxy resin composition is 0 to 5% by weight with respect to the sum of said epoxy resin composition.

2. Use of the epoxy resin composition for a fiber-reinforced composite material according to claim 1, wherein its viscosity measured using a cone-plate viscometer in ISO 2884-1 (1999) at 25°C is 0.1 to 2 Pa·s.

3. Use of the epoxy resin composition for a fiber-reinforced composite material according to claim 1, wherein when the times required for a cure index obtained by dielectric measurement at a retained constant temperature to reach 10% and 90% are denoted by $t_{10}$ and $t_{90}$, $t_{10}$ and $t_{90}$ (unit: minutes) have a specific temperature T which satisfies the following three relational expressions:

$$1 \leq t_{10} \leq 10$$

$$3 \leq t_{90} \leq 30,$$

and

$$1 < t_{90}/t_{10} \leq 3.$$

4. Use of the epoxy resin composition for a fiber-reinforced composite material according to claim 3, wherein said specific temperature T is in a range of 90 to 130°C.

5. Use of the epoxy resin composition for a fiber-reinforced composite material according to claim 1, wherein a glass transition temperature Tg of a resin cured product which is prepared by curing said epoxy resin composition at 100°C for 20 minutes is 90 to 150°C.

6. A production method of a fiber-reinforced composite material in which an epoxy resin composition comprising an epoxy resin [A], an acid anhydride curing agent [B] and an organic phosphorus compound [C]in which one or more aromatic groups are directly bound to a phosphorus atom, wherein said organic phosphorus compound [C] is contained in an amount of 0.2 to 2% by weight in terms of a phosphorus atom contained amount with respect to the sum of said epoxy resin composition, an amount of a nitrogen atom containing compound contained in said epoxy resin composition is 0 to 0.5% by weight in terms of a nitrogen atom contained amount with respect to the sum of said epoxy resin composition, and an amount of a compound having a polymerizable unsaturated group contained in said epoxy resin composition is 0 to 5% by weight with respect to the sum of said epoxy resin composition, and when the times required for a cure index obtained by dielectric measurement at a retained constant temperature to reach 10% and 90% are denoted by $t_{10}$ and $t_{90}$, $t_{10}$ and $t_{90}$ (unit: minutes) have a specific temperature T which satisfies the following three relational expressions:

$$1 \leq t_{10} \leq 10$$

$$3 \leq t_{90} \leq 30,$$

and

$$1 < t_{90}/t_{10} \leq 3,$$

is injected into a reinforcing fiber substrate disposed in a molding tool heated to a specific temperature T, is impregnated with the reinforcing fiber substrate, and is cured in the molding tool.

7. A production method of a fiber-reinforced composite material according to claim 6, said specific temperature is in the range of 90 to 130°C and in which the epoxy resin composition, warmed to 40 to 70°C, is injected into a reinforcing fiber substrate disposed in a molding tool heated to 90 to 130°C, is impregnated with the reinforcing fiber substrate, and is cured in the molding tool.

8. The production method of a fiber-reinforced composite material according to claim 6 or 7, wherein an epoxy resin composition is injected through a plurality of points provided at the molding tool in injecting the epoxy resin composition into a reinforcing fiber substrate disposed in the molding tool.

9. A fiber-reinforced composite material comprising a resin cured product formed by curing an epoxy resin composition and reinforcing fibers, the epoxy resin composition comprising an epoxy resin [A], an acid anhydride curing agent [B] and an organic phosphorus compound [C]in which one or more aromatic groups are directly bound to a phosphorus atom, wherein said organic phosphorus compound [C] is contained in an amount of 0.2 to 2% by weight in terms of a phosphorus atom contained amount with respect to the sum of said epoxy resin composition, an amount of a nitrogen atom containing compound contained in said epoxy resin composition is 0 to 0.5% by weight in terms of a nitrogen atom contained amount with respect to the sum of said epoxy resin composition, and an amount of a compound having a polymerizable unsaturated group contained in said epoxy resin composition is 0 to 5% by weight with respect to the sum of said epoxy resin composition.

10. The fiber-reinforced composite material according to claim 9, wherein the epoxy resin composition has viscosity measured using a cone-plate viscometer in ISO 2884-1 (1999) at 25°C is 0.1 to 2 Pa•s.

11. The fibre-reinforced composite material according to claim 9, wherein the epoxy resin composition, when the times required for a cure index obtained by dielectric measurement at a retained constant temperature to reach 10% and 90% are denoted by $t_{10}$ and $t_{90}$, $t_{10}$ and $t_{90}$ (unit: minutes) have a specific temperature T which satisfies the following three relational expressions:

$$1 \leq t_{10} \leq 10$$

$$3 \leq t_{90} \leq 30,$$

and

$$1 < t_{90}/t_{10} \leq 3;$$

and optionally said specific temperature T is in a range of 90 to 130°C.

12. The fibre-reinforced composite material according to claim 9 wherein the epoxy resin composition glass transition temperature Tg of a resin cured product which is prepared by curing said epoxy resin composition at 100°C for 20 minutes is 90 to 150°C.

13. A fiber-reinforced composite material according to any one of claims 9 to 12 comprising a resin cured product formed by curing the epoxy resin composition and reinforcing fibers, wherein a glass transition temperature Tg is 90 to 150°C.

14. A fiber-reinforced composite material having a sandwich structure in which the fiber-reinforced composite material according to any one of claims 9 to 12 is used as a skin layer.

15. An automobile part formed by using the fiber-reinforced composite material according to any one of claims 9 to 12.

**Patentansprüche**

1. Verwendung einer Epoxyharzzusammensetzung zur Herstellung eines faserverstärkten Verbundmaterials, wobei die Zusammensetzung ein Epoxyharz (A), ein Säureanhydridhärtungsmittel (B) und eine organische Phosphorverbindung (C) umfasst, in der eine oder mehrere aromatische Gruppen direkt an ein Phosphoratom gebunden ist, wobei die organische Phosphorverbindung (C) in einer Menge von 0,2 bis 2 Gew.-% berechnet als Phosphoratom bezogen auf die gesamte Epoxyharzzusammensetzung enthalten ist, die Menge einer Stickstoffatom-hältigen Verbindung, die in der Epoxyharzzusammensetzung enthalten ist, 0 bis 0,5 Gew.-% berechnet als Stickstoffatom bezogen auf die gesamte Epoxyharzzusammensetzung beträgt und eine Menge einer Verbindung mit einer polymerisierbaren ungesättigten Gruppe, die in der Epoxyharzzusammensetzung enthalten ist, 0 bis 5 Gew.-% bezogen auf die gesamte Epoxyharzzusammensetzung beträgt.

2. Verwendung einer Epoxyharzzusammensetzung für ein faserverstärktes Verbundmaterial nach Anspruch 1, wobei die unter Verwendung eines Kegel-Platte-Viskosimeters gemäß ISO 2884-1 (1999) bei 25 °C gemessene Viskosität 0,1 bis 2 Pas beträgt.

3. Verwendung einer Epoxyharzzusammensetzung für ein faserverstärktes Verbundmaterial nach Anspruch 1, wobei, wenn die Dauer, die zum Erreichen eines mittels dielektrischer Messung bei einer erhaltenen konstanten Temperatur erhaltenen Härtungsindex von 10 bzw. 90 % erforderlich ist, als $t_{10}$ und $t_{90}$ bezeichnet wird, $t_{10}$ und $t_{90}$ (Einheit: Minuten) eine spezifische Temperatur T aufweisen, die die folgenden drei Vergleichsausdrücke erfüllt:

$$1 \le t_{10} \le 10,$$

$$3 \le t_{90} \le 30$$

und

$$1 < t_{90}/t_{10} \le 3.$$

4. Verwendung einer Epoxyharzzusammensetzung für ein faserverstärktes Verbundmaterial nach Anspruch 3, wobei die spezifische Temperatur T in einem Bereich von 90 bis 130 °C liegt.

5. Verwendung einer Epoxyharzzusammensetzung für ein faserverstärktes Verbundmaterial nach Anspruch 1, wobei eine Glasübergangstemperatur Tg eines gehärteten Harzprodukts, das durch 20-minütiges Härten der Epoxyharzzusammensetzung bei 100 °C hergestellt wird, 90 bis 150 °C beträgt.

6. Herstellungsverfahren für ein faserverstärktes Verbundmaterial, bei dem eine Epoxyharzzusammensetzung, die Folgendes umfasst: ein Epoxyharz (A), ein Säureanhydridhärtungsmittel (B) und eine organische Phosphorverbindung (C), in der eine oder mehrere aromatische Gruppen direkt an ein Phosphoratom gebunden ist, wobei die organische Phosphorverbindung (C) in einer Menge von 0,2 bis 2 Gew.-% berechnet als Phosphoratom bezogen auf die gesamte Epoxyharzzusammensetzung enthalten ist, die Menge einer Stickstoffatom-hältigen Verbindung, die in der Epoxyharzzusammensetzung enthalten ist, 0 bis 0,5 Gew.-% berechnet als Stickstoffatom bezogen auf die gesamte Epoxyharzzusammensetzung beträgt und eine Menge einer Verbindung mit einer polymerisierbaren ungesättigten Gruppe, die in der Epoxyharzzusammensetzung enthalten ist, 0 bis 5 Gew.-% bezogen auf die gesamte Epoxyharzzusammensetzung beträgt und wobei, wenn die Dauer, die zum Erreichen eines mittels dielektrischer Messung bei einer erhaltenen konstanten Temperatur erhaltenen Härtungsindex von 10 bzw. 90 % erforderlich ist, als $t_{10}$ und $t_{90}$ bezeichnet wird, $t_{10}$ und $t_{90}$ (Einheit: Minuten) eine spezifische Temperatur T aufweisen, die die folgenden drei Vergleichsausdrücke erfüllt:

$$1 \le t_{10} \le 10,$$

$$3 \le t_{90} \le 30$$

und

$$1 < t_{90}/t_{10} \le 3;$$

in ein Verstärkungsfasersubstrat eingespritzt wird, das in einem Formwerkzeug angeordnet ist, das auf eine spezifische Temperatur T erhitzt ist, mit dem Verstärkungsfasersubstrat imprägniert wird und in dem Formwerkzeug gehärtet wird.

7. Herstellungsverfahren für ein faserverstärktes Verbundmaterial nach Anspruch 6, wobei die spezifische Temperatur im Bereich von 90 bis 130 °C liegt und die Epoxyharzzusammensetzung aufgewärmt auf 40 bis 70 °C in ein Verstärkungsfasersubstrat eingespritzt wird, das in einem auf 90 bis 130 °C erhitzten Formwerkzeug angeordnet ist, mit dem Verstärkungsfasersubstrat imprägniert wird und in dem Formwerkzeug gehärtet wird.

8. Herstellungsverfahren für ein faserverstärktes Verbundmaterial nach Anspruch 6 oder 7, wobei eine Epoxyharzzusammensetzung durch eine Vielzahl von an dem Formwerkzeug bereitgestellten Punkten zum Einspritzen der Epoxyharzzusammensetzung in ein in dem Formwerkzeug angeordnetes Verstärkungsfasersubstrat eingespritzt wird.

9. Faserverstärktes Verbundmaterial, das Folgendes umfasst: ein gehärtetes Harzprodukt, das durch Härten einer Epoxyharzzusammensetzung und von Verstärkungsfasern ausgebildet wird, wobei die Epoxyharzzusammensetzung Folgendes umfasst: ein Epoxyharz (A), ein Säureanhydridhärtungsmittel (B) und eine organische Phosphorverbindung (C), in der eine oder mehrere aromatische Gruppen direkt an ein Phosphoratom gebunden ist, wobei die organische Phosphorverbindung (C) in einer Menge von 0,2 bis 2 Gew.-% berechnet als Phosphoratom bezogen auf die gesamte Epoxyharzzusammensetzung enthalten ist, die Menge einer Stickstoffatom-hältigen Verbindung, die in der Epoxyharzzusammensetzung enthalten ist, 0 bis 0,5 Gew.-% berechnet als Stickstoffatom bezogen auf die gesamte Epoxyharzzusammensetzung beträgt und eine Menge einer Verbindung mit einer polymerisierbaren ungesättigten Gruppe, die in der Epoxyharzzusammensetzung enthalten ist, 0 bis 5 Gew.-% bezogen auf die gesamte Epoxyharzzusammensetzung beträgt.

10. Faserverstärktes Verbundmaterial nach Anspruch 9, wobei die Epoxyharzzusammensetzung eine unter Verwendung eines Kegel-Platte-Viskosimeters gemäß ISO 2884-1 (1999) bei 25 °C gemessene Viskosität von 0,1 bis 2 Pas aufweist.

11. Faserverstärktes Verbundmaterial nach Anspruch 9, wobei, wenn die Dauer, die zum Erreichen eines mittels dielektrischer Messung bei einer erhaltenen konstanten Temperatur erhaltenen Härtungsindex von 10 bzw. 90 % erforderlich ist, als $t_{10}$ und $t_{90}$ bezeichnet wird, $t_{10}$ und $t_{90}$ (Einheit: Minuten) eine spezifische Temperatur T aufweisen, die die folgenden drei Vergleichsausdrücke erfüllt:

$$1 \leq t_{10} \leq 10$$

$$3 \leq t_{90} \leq 30$$

und

$$1 < t_{90}/t_{10} \leq 3;$$

und gegebenenfalls die spezifische Temperatur T 90 bis 130 °C beträgt.

12. Faserverstärktes Verbundmaterial nach Anspruch 9, wobei die Epoxyharzzusammensetzungsglasübergangstemperatur Tg eines gehärteten Harzprodukts, das durch 20-minütiges Härten der Epoxyharzzusammensetzung bei 100 °C hergestellt wird, 90 bis 150 °C beträgt.

13. Faserverstärktes Verbundmaterial nach einem der Ansprüche 9 bis 12, das ein gehärtetes Harzprodukt umfasst, das durch Härten von Epoxyharzzusammensetzung und Verstärkungsfasern ausgebildet wird, wobei eine Glasübergangstemperatur Tg 90 bis 150 °C beträgt.

14. Faserverstärktes Verbundmaterial mit Sandwich-Struktur, wobei ein faserverstärktes Verbundmaterial nach einem der Ansprüche 9 bis 12 als Isolationsschicht verwendet wird.

15. Fahrzeugteil, das unter Verwendung eines faserverstärkten Verbundmaterials nach einem der Ansprüche 9 bis 12 ausgebildet wird.

**Revendications**

1. Utilisation d'une composition de résine époxy pour produire un matériau composite renforcé par des fibres, la composition comprenant une résine époxy [A], un agent durcisseur à base d'anhydride d'acide [B] et un composé organique du phosphore [C] dans lequel un ou plusieurs groupes aromatiques sont directement liés à un atome de phosphore, dans laquelle ledit composé organique du phosphore [C] est contenu en une quantité de 0,2 à 2 % en poids en termes de quantité contenue d'atomes de phosphore par rapport à la somme de ladite composition de résine époxy, la quantité d'un composé contenant des atomes d'azote contenu dans ladite composition de résine époxy est de 0 à 0,5 % en poids en termes de quantité contenue d'atomes d'azote par rapport à la somme de ladite composition de résine époxy, et la quantité d'un composé ayant un groupe insaturé polymérisable contenu dans ladite composition de résine époxy est de 0 à 5 % en poids par rapport à la somme de ladite composition de résine époxy.

2. Utilisation d'une composition de résine époxy pour un matériau composite renforcé par des fibres selon la revendication 1, dans laquelle sa viscosité, mesurée par utilisation d'un viscosimètre plan-cône conformément à la norme ISO 2884-1 (1999) à 25°C, est de 0,1 à 2 Pa•s.

3. Utilisation d'une composition de résine époxy pour un matériau composite renforcé par des fibres selon la revendication 1, dans laquelle, quand les temps requis pour que l'indice de durcissement, obtenu par mesure diélectrique à une température constante conservée, atteigne 10 % et 90 %, sont indiqués par $t_{10}$ et $t_{90}$, $t_{10}$ et $t_{90}$ (unité : minutes) ont une température spécifique T qui satisfait aux trois expressions relationnelles suivantes :

$$1 \leq t_{10} \leq 10$$

$$3 \leq t_{90} \leq 30,$$

et

$$1 < t_{90}/t_{10} \leq 3.$$

4. Utilisation d'une composition de résine époxy pour un matériau composite renforcé par des fibres selon la revendication 3, dans laquelle ladite température spécifique T est située dans la plage allant de 90 à 130°C.

5. Utilisation d'une composition de résine époxy pour un matériau composite renforcé par des fibres selon la revendication 1, dans laquelle la température de transition vitreuse Tg d'un produit durci en résine qui est préparé par durcissement de ladite composition de résine époxy à 100°C pendant 20 minutes est de 90 à 150°C.

6. Procédé de production d'un matériau composite renforcé par des fibres dans lequel une composition de résine époxy comprenant une résine époxy [A], un agent durcisseur à base d'anhydride d'acide [B] et un composé organique du phosphore [C] dans lequel un ou plusieurs groupes aromatiques sont directement liés à un atome de phosphore, dans lequel ledit composé organique du phosphore [C] est contenu en une quantité de 0,2 à 2 % en poids en termes de quantité contenue d'atomes de phosphore par rapport à la somme de ladite composition de résine époxy, la quantité d'un composé contenant des atomes d'azote contenu dans ladite composition de résine époxy est de 0 à 0,5 % en poids en termes de quantité contenue d'atomes d'azote par rapport à la somme de ladite composition de résine époxy, et la quantité d'un composé ayant un groupe insaturé polymérisable contenu dans ladite composition de résine époxy est de 0 à 5 % en poids par rapport à la somme de ladite composition de résine époxy, et quand les temps requis pour que l'indice de durcissement, obtenu par mesure diélectrique à une température constante conservée, atteigne 10 % et 90 %, sont indiqués par $t_{10}$ et $t_{90}$, $t_{10}$ et $t_{90}$ (unité : minutes) ont une température spécifique T qui satisfait aux trois expressions relationnelles suivantes :

$$1 \leq t_{10} \leq 10$$

$$3 \leq t_{90} \leq 30,$$

et

$$1 < t_{90}/t_{10} \leq 3,$$

est injectée dans un substrat de fibres de renforcement disposé dans un outil de moulage chauffé à une température spécifique T, et imprégnée avec le substrat de fibres de renforcement, et est durcie dans l'outil de moulage.

7. Procédé de production d'un matériau composite renforcé par des fibres selon la revendication 6, dans lequel ladite température spécifique est située dans la plage allant de 90 à 130°C et dans lequel la composition de résine époxy, réchauffée à une température de 40 à 70°C, est injectée dans un substrat de fibres de renforcement disposé dans un outil de moulage chauffé à une température de 90 à 130°C, est imprégnée avec le substrat de fibres de renforcement, et est durcie dans l'outil de moulage.

8. Procédé de production d'un matériau composite renforcé par des fibres selon la revendication 6 ou 7, dans lequel une composition de résine époxy est injecté par l'intermédiaire d'une pluralité de points disposés au niveau de l'outil de moulage lors de l'injection de la composition de résine époxy dans un substrat de fibres de renforcement disposé dans l'outil de moulage.

9. Matériau composite renforcé par des fibres comprenant un produit durci en résine formé par durcissement d'une composition de résine époxy et des fibres de renforcement, la composition de résine époxy comprenant une résine époxy [A], un agent durcisseur à base d'anhydride d'acide [B] et un composé organique du phosphore [C] dans lequel un ou plusieurs groupes aromatiques sont directement liés à un atome de phosphore, dans lequel ledit composé organique du phosphore [C] est contenu en une quantité de 0,2 à 2 % en poids en termes de quantité contenue d'atomes de phosphore par rapport à la somme de ladite composition de résine époxy, la quantité d'un composé contenant des atomes d'azote contenu dans ladite composition de résine époxy est de 0 à 0,5 % en poids en termes de quantité contenue d'atomes d'azote par rapport à la somme de ladite composition de résine époxy, et la quantité d'un composé ayant un groupe insaturé polymérisable contenu dans ladite composition de résine époxy est de 0 à 5 % en poids par rapport à la somme de ladite composition de résine époxy.

10. Matériau composite renforcé par des fibres selon la revendication 9, dans lequel la composition de résine époxy a une viscosité, mesurée par utilisation d'un viscosimètre plan-cône conformément à la norme ISO 2884-1 (1999) à 25°C, de 0,1 à 2 Pa•s.

11. Matériau composite renforcé par des fibres selon la revendication 9, dans lequel, pour la composition de résine époxy, quand les temps requis pour que l'indice de durcissement, obtenu par mesure diélectrique à une température constante conservée, atteigne 10 % et 90 %, sont indiqués par $t_{10}$ et $t_{90}$, $t_{10}$ et $t_{90}$ (unité : minutes) ont une température spécifique T qui satisfait aux trois expressions relationnelles suivantes :

$$1 \leq t_{10} \leq 10$$

$$3 \leq t_{90} \leq 30,$$

et

$$1 < t_{90}/t_{10} \leq 3 \, ;$$

et éventuellement ladite température spécifique T est située dans la plage allant de 90 à 130°C.

12. Matériau composite renforcé par des fibres selon la revendication 9, dans lequel la température de transition vitreuse de la composition de résine époxy Tg d'un produit durci en résine qui est préparé par durcissement de ladite composition de résine époxy à 100°C pendant 20 minutes est de 90 à 150°C.

13. Matériau composite renforcé par des fibres selon l'une quelconque des revendications 9 à 12, comprenant un produit durci en résine formé par durcissement de la composition de résine époxy et des fibres de renforcement, dans lequel la température de transition vitreuse Tg est de 90 à 150°C.

14. Matériau composite renforcé par des fibres ayant une structure en sandwich dans laquelle le matériau composite renforcé par des fibres selon l'une quelconque des revendications 9 à 12 est utilisé en tant que couche de peau.

**15.** Pièce d'automobile formée par utilisation du matériau composite renforcé par des fibres selon l'une quelconque des revendications 9 à 12.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3050244 A
- JP 7025986 A
- US 7148294 B
- JP 7028043 A
- US 5198479 A
- JP 2872848 B
- EP 1454956 A